# EUROPEAN PATENT APPLICATION

(11) **EP 4 255 039 A1**
(43) Date of publication of application: **04.10.2023**
(21) Application number: 22738935.0
(22) Date of filing: 07.01.2022
(51) Int. Cl.: H04W 52/02

(54) **POWER-SAVING HANDLING METHOD AND APPARATUS, AND USER EQUIPMENT**

(30) Priority: 13.01.2021 CN 202110044778
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); ZENG, Yu, Dongguan, Guangdong 523863 (CN); LIU, Shixiao, Dongguan, Guangdong 523863 (CN)
(74) Representative: Murgitroyd & Company
(86) International application number: PCT/CN2022/070717
(87) International publication number: WO 2022/152054

(57) **Abstract**

This application discloses a power saving processing method and apparatus, and a terminal. The method includes: determining, by a first terminal and based on a target condition or first information, transmission of power saving information, and/or determining, by the first terminal and based on the target condition or the first information, that a target terminal is dormant or wake-up, or non-active or active, where the power saving information indicates whether the target terminal is dormant or wake-up, or non-active or active; and the target terminal includes: the first terminal, and/or, a second terminal for performing sidelink communication with the first terminal.

## Description

### CROSS-REFERENCE TO RELATED APPLICATION

This application claims priority to Chinese Patent Application No. 202110044778.2 filed on January 13, 2021, which is incorporated herein by reference in its entirety.

### TECHNICAL FIELD

This application relates to the technical field of communications, and specifically, to a power saving processing method and apparatus, and a terminal.

### BACKGROUND

A discontinuous reception (Discontinuous Reception, DRX) mechanism is introduced for both long term evolution (Long Term Evolution, LTE) and New Radio (New Radio, NR), and power saving of a terminal is achieved by configuring DRX on (on) time and off (off) time.

An LTE system supports sidelink (SideLink, SL) transmission, that is, data transmission is directly performed on a physical layer between terminals (User Equipment, UE). Communication of an LTE sidelink is performed based on broadcasting. Although the LTE sidelink can be used to support basic security type of vehicle to everything (Vehicle to everything, V2X) communication, it does not applicable to other more advanced V2X services. A 5th generation mobile communication technology (5^{th} Generation Mobile Communication Technology, 5G) NR system supports a more advanced sidelink transmission design, for example, unicast, multicast, or the like, so as to support more comprehensive service types.

An SL terminal needs to maintain an active state, that is, to perform receiving and/or sending of a target channel/signal, for example, to receive data, within an SL DRX active time or on duration (on duration).

However, in some conditions, there are cases where a receiving terminal is wake-up but no valid transmission of SL data, which results in unnecessary power consumption of the receiving terminal.

### SUMMARY

Embodiments of this application provide a power saving processing method and apparatus, and a terminal, which can solve the problem that unnecessary power consumption exists in a terminal in an existing power saving mechanism.

According to a first aspect, an embodiment of this application provides a power saving processing method, including:
determining, by a first terminal and based on a target condition or first information, transmission of power saving information, and/or determining, by the first terminal and based on the target condition or the first information, that a target terminal is dormant or wake-up, or non-active or active, where
the power saving information indicates whether the target terminal is dormant or wake-up, or non-active or active; and the target terminal includes: the first terminal, and/or, a second terminal for performing sidelink communication with the first terminal.

According to a second aspect, an embodiment of this application provides a power saving processing method, including:
determining, by a second terminal and based on transmission of power saving information of a first terminal, that a target terminal is dormant or wake-up, or non-active or active, where
the target terminal includes: the second terminal, and/or, the first terminal for performing sidelink communication with the second terminal.

According to a third aspect, an embodiment of this application provides a power saving processing method, including:
performing, by a third terminal and based on a predefined behavior, power saving processing on at least one of the third terminal and a fourth terminal.

According to a fourth aspect, an embodiment of this application provides a power saving processing apparatus, including at least one of the following:
a first determining module, configured to determine, based on a target condition or first information, transmission of power saving information, and/or determine, based on the target condition or the first information, that a target terminal is dormant or wake-up, or non-active or active, where
the power saving information indicates whether the target terminal is dormant or wake-up, or non-active or active; and the target terminal includes: a first terminal, and/or, a second terminal for performing sidelink communication with the first terminal.

According to a fifth aspect, an embodiment of this application provides a power saving processing apparatus, including:
a second determining module, configured to determine, based on transmission of power saving information of a first terminal, that a target terminal is dormant or wake-up, or non-active or active, where
the target terminal includes: the second terminal, and/or, the first terminal for performing sidelink communication with the second terminal.

According to a sixth aspect, an embodiment of this application provides a power saving processing apparatus, including:
a processing module, configured to perform, based on a predefined behavior, power saving processing on at least one of the third terminal and a fourth terminal.

According to a seventh aspect, an embodiment of this application provides a terminal. The terminal includes a processor, a memory, and a program or instructions stored in the memory and executable on the processor, where the program or instructions, when executed by the processor, implement the steps of the method according to the first aspect, or implement the steps of the method according to the second aspect, or implement the steps of the method according to the third aspect.

According to an eighth aspect, an embodiment of this application provides a readable storage medium, storing a program or instructions, where the program or instructions, when executed by a processor, implement the steps of the method according to the first aspect, or implement the steps of the method according to the second aspect, or implement the steps of the method according to the third aspect.

According to a ninth aspect, an embodiment of this application provides a chip. The chip includes a processor and a communication interface, the communication interface is coupled to the processor, and the processor is configured to execute a program or instructions of a network side device, to implement the method according to the first aspect, or to implement the method according to the second aspect, or to implement the method according to the third aspect.

According to a tenth aspect, an embodiment of this application provides a computer program product, where the computer program product is stored in a non-transitory storage medium, and the computer program product is executed by at least one processor, to implement the method according to the first aspect, or to implement the method according to the second aspect, or to implement the method according to the third aspect.

In the embodiments of this application, whether to transmit the power saving information is controlled by a control node, or whether to transmit the power saving information is controlled based on a predefined target condition, so that states of the first terminal and/or the second terminal on the sidelink can be adjusted, to avoid unnecessary power consumption of the terminal, thereby achieving the purpose of power saving of the terminal.

### BRIEF DESCRIPTION OF THE DRAWINGS

FIG. 1 is a block diagram of a wireless communication system applicable to an embodiment of this application;
FIG. 2 is a first flowchart of the steps of a power saving processing method according to an embodiment of this application;
FIG. 3 is a second flowchart of the steps of a power saving processing method according to an embodiment of this application;
FIG. 4 is a third flowchart of the steps of a power saving processing method according to an embodiment of this application;
FIG. 5 is a first schematic structural diagram of a power saving processing apparatus according to an embodiment of this application;
FIG. 6 is a second schematic structural diagram of a power saving processing apparatus according to an embodiment of this application;
FIG. 7 is a third schematic structural diagram of a power saving processing apparatus according to an embodiment of this application;
FIG. 8 is a first schematic structural diagram of a terminal according to an embodiment of this application; and
FIG. 9 is a second schematic structural diagram of a terminal according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the scope of protection of this application.

In the specification and claims of this application, the terms "first" and "second" are used to distinguish similar objects, but are unnecessarily used to describe a specific sequence or order. It is to be understood that the terms used in this way is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" used in this specification and the claims represents at least one of the connected objects, and the character "/" generally indicates that the associated objects are in an "or" relationship.

It is worth pointing out that the technologies described in the embodiments of this application are not limited to the long term evolution (Long Term Evolution, LTE)/LTE-advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. The technology described in this application can be applied to the systems and radio technologies mentioned above, and can also be applied to other systems and radio technologies. The following description describes a new radio (NR) system for exemplary purposes, and uses the NR terminology in most of the following description, these techniques are also applicable to applications other than NR system applications, such as a 6th generation (6^{th} Generation, 6G) communication system.

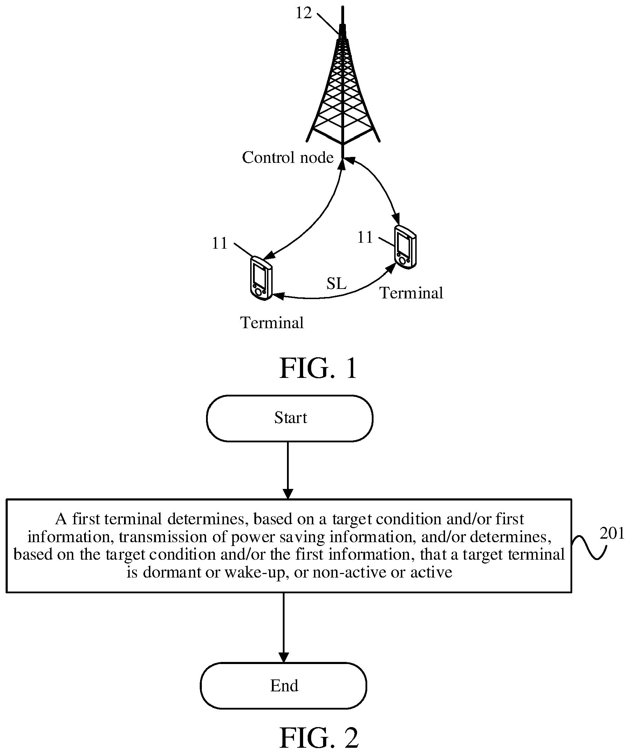

FIG. 1 is a block diagram of an applicable wireless communication system according to an embodiment of this application. The wireless communication system includes a terminal 11 and a control node 12. The terminal 11 may also be referred to as a terminal device or user equipment (User Equipment, UE), and the terminal 11 may be a terminal-side device such as a mobile phone, a tablet computer (Tablet Personal Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (Vehicle User Equipment, VUE), or pedestrian user equipment (Pedestrian User Equipment, PUE). The wearable device includes: a bracelet, a headphone, glasses, or the like. It should be noted that, the specific type of the terminal 11 is not limited in the embodiments of this application. The control node 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a wireless local area network (Wireless local area Networks, WLAN) access point, a WiFi node, a transmitting receiving point (Transmitting Receiving point, TRP), or some other appropriate term in the field, as long as the same technical effect is achieved, and the base station is not limited to a specific technical term. It should be noted that, in the embodiments of this application, for example, only a base station in an NR system is used, but a specific type of the base station is not limited.

The power saving processing method and apparatus, and the terminal provided in the embodiments of this application are described in detail below with reference to the accompanying drawings through specific embodiments and application scenarios thereof.

A first terminal, a second terminal, a third terminal, and a fourth terminal mentioned in the embodiments of this application are all terminals that support a sidelink SL. There are two resource allocation mechanisms for the SL terminals.

Mode 1 (Model): a control node schedules a resource to a terminal for transmission, and a receiving terminal may be a Model terminal or a Mode2 terminal. In this application, the Model terminal is a terminal which is scheduled by the control node or for which an SL resource is provided by the control node, and a name thereof may be Model or others, for example, Mode3, Mode4, or the like, which is not specifically limited herein.

Mode 2 (Mode2): a terminal autonomously determines, through sensing (sensing), a resource for sending.

It should be noted that, the power saving processing method provided in the embodiments of this application is applicable to power saving in an SL scenario in a granted frequency band, and/or, power saving in an SL scenario in an ungranted frequency band; or applicable to a scenario where power saving is needed at either end of a sending end and a receiving end (for example, vehicle-to-pedestrian V2P), or a scenario where power saving is needed at both ends of a sending end and a receiving end (for example, communication such as peer-to-peer (Peer-To-Peer, P2P) or private network Internet of Things (Personal internet of thing, or, passive internet of thing, PIOT) performed through an SL or other interfaces). A terminal may perform SL reception or transmission at different time points, respectively, that is, may be a sending terminal and a receiving terminal, respectively.

As shown in FIG. 2, an embodiment of this application provides power saving processing method, including the following steps.

Step 201: a first terminal determines, based on a target condition and/or first information, transmission of power saving information, and/or determines, based on the target condition and/or the first information, that a target terminal is dormant or wake-up, or non-active or active, where
the power saving information indicates whether the target terminal is dormant or wake-up, or non-active or active; and the target terminal includes: the first terminal, and/or, a second terminal for performing sidelink communication with the first terminal.

Optionally, determining that the target terminal is dormant or wake-up, or non-active or active includes: determining that the target terminal is dormant or wake-up, or non-active or active on a target link. The target link includes: a sidelink SL, and/or a Uu.

It should be noted that, step 201 of this embodiment of this application includes at least the following situations:
the first terminal determines, based on the target condition, the transmission of the power saving information;
the first terminal determines, based on the target condition, the dormancy or wake-up, or inactivation or activation on the SL;
the first terminal determines, based on the target condition, the dormancy or wake-up, or inactivation or activation on the Uu;
the first terminal determines, based on the target condition, the dormancy or wake-up, or inactivation or activation on the SL and the Uu;
the first terminal determines, based on the first information, the transmission of the power saving information;
the first terminal determines, based on the first information, the dormancy or wake-up, or inactivation or activation on the SL;
the first terminal determines, based on the first information, the dormancy or wake-up, or inactivation or activation on the SL and the Uu;
the first terminal determines, based on the target condition and the first information, the transmission of the power saving information;
the first terminal determines, based on the target condition and the first information, the dormancy or wake-up, or inactivation or activation on the SL;
the first terminal determines, based on the target condition and the first information, the dormancy or wake-up, or inactivation or activation on the Uu;
the first terminal determines, based on the target condition and the first information, the dormancy or wake-up, or inactivation or activation on the SL and the Uu;
the first terminal determines, based on the target condition, the transmission of the power saving information and the dormancy or wake-up, or inactivation or activation on the SL;
the first terminal determines, based on the target condition, the transmission of the power saving information and the dormancy or wake-up, or inactivation or activation on the Uu;
the first terminal determines, based on the target condition, the transmission of the power saving information and the dormancy or wake-up, or inactivation or activation on the SL and the Uu;
the first terminal determines, based on the first information, the transmission of the power saving information and the dormancy or wake-up, or inactivation or activation on the SL;
the first terminal determines, based on the first information, the transmission of the power saving information and the dormancy or wake-up, or inactivation or activation on the Uu;
the first terminal determines, based on the first information, the transmission of the power saving information and the dormancy or wake-up, or inactivation or activation on the SL and the Uu;
the first terminal determines, based on the target condition and the first information, the transmission of the power saving information and the dormancy or wake-up, or inactivation or activation on the SL;
the first terminal determines, based on the target condition and the first information, the transmission of the power saving information and the dormancy or wake-up, or inactivation or activation on the Uu; or
the first terminal determines, based on the target condition and the first information, the transmission of the power saving information and the dormancy or wake-up, or inactivation or activation on the SL and the Uu.

In the embodiments of this application, "transmission" refers to sending or receiving, that is, the transmission of the power saving information of the first terminal includes: at least one of sending of the power saving information of the first terminal, receiving of the power saving information of the first terminal, the first terminal not transmitting the power saving information, and the first terminal not receiving the power saving information.

It should be noted that, the dormancy or wake-up, or inactivation or activation of the first terminal (or the second terminal) mentioned in the embodiments of this application includes:
1. a case correlated with an SL power saving mechanism, which can be interpreted as dormancy or wake-up, or inactivation or activation of an SL power saving mechanism of the first terminal, or dormancy or wake-up, or inactivation or activation of an SL power saving mechanism of the second terminal;
2. a case uncorrelated with whether there is an SL power saving mechanism, but to distinguish whether some behaviors of the terminal can be performed normally, for example, in a case that the first terminal is activated or woken up, a corresponding behavior can be performed; and in a case that the first terminal is dormant or deactivated, a corresponding behavior cannot be performed.

In other words, the activation or wake-up may be interpreted as that the SL power saving mechanism enters an active time, or that the activation or wake-up is performed in the active time or within the active time of the SL power saving mechanism, or may refer to that a particular behavior may be performed, for example, at least one of not measuring, data receiving, control receiving, synchronization signal receiving, sensing (sensing), feeding back, or the like may be performed.

The deactivation or dormancy may be interpreted as that the SL power saving mechanism enters an inactive time, or that the deactivation or dormancy is performed in the active time or within the active time of the SL power saving mechanism, or may refer to that a particular behavior is not performed, for example, at least one of not measuring, not receiving data, not receiving control, not receiving a synchronization signal, not sensing, not feeding back, or the like may be performed.

The SL power saving mechanism may be SL DRX or SL power saving sensing (sensing), and the power saving sensing may be partial sensing (partial sensing), or may be some simplified, short, or aperiodic, or triggered sensing.

The SL DRX may be used to control sensing, measuring, monitoring, and/or transmission (the transmission mentioned in this application is receiving or sending) of the target object by the terminal. The target object includes at least one of the following: a control channel, a control signal, a data channel, a data signal, a reference signal, a feedback signal, a feedback channel, a request message, and a response message.

The power saving sensing may be interpreted as a partial sensing mechanism, including a sensing window (sensing window) and a selection window (selection window).

It should be noted that, the "power saving information" mentioned in the embodiments of this application may be an SL wake up signal (Wake Up Single, WUS), which may also be referred to as: state notification information, sleep notification (sleep notification) information, deactivation notification (off notification) information, wake notification (wake notification) information, activation notification (on notification) information; the details are not limited herein.

It should be noted that, in this embodiment of this application, in a case that the dormancy or wake-up, or inactivation or activation is determined based on the target condition, the first terminal is within a coverage of the control node (the first terminal may be a mode1 terminal, a connected state mode2 terminal, or an idle mode2 terminal), or the control node may be a first configuration/scheduling SL resource. The control node is a base station or a terminal. Corresponding scenarios of the target condition mainly include the following scenarios.

Scenario 1: intra-radio access technology (Radio Access Technology, RAT) (there is a radio access technology), for example, at least one of that the control node is an NR control node, the Uu of the first terminal is an NR Uu, the Uu interface of the first terminal has a corresponding NR Uu DRX, or the like. The target condition in the scenario is a condition correlated with the NR Uu interface in the following conditions.

Scenario 2: inter-RAT (there are at least two radio access technologies), for example, at least one of that the control node is an LTE control node, the Uu of the first terminal is an LTE Uu, the Uu interface of the first terminal has a corresponding LTE Uu DRX, or the like. The target condition in the scenario is a condition correlated with the LTE Uu interface in the following conditions.

Scenario 3: both intra-RAT and/or inter-RAT may be considered, the target condition is a condition to which both an NR Uu interface and an LTE Uu interface adapt.

Scenario 4: some conditions uncorrelated with the Uu.

In an optional embodiment, in a case that the target condition includes a first condition, that the first terminal determines, based on the target condition, the transmission of the power saving information in step 201 includes:
transmitting, by the first terminal, the power saving information in a case that the first condition is satisfied, where the power saving information indicates that the target terminal is dormant or non-active. For example, the power saving information indicates that the first terminal is in a dormant state or an inactive state, and/or the power saving information indicates that the second terminal enters a dormant state or an inactive state.

For example, the power saving information may be configured to indicate dormancy or inactivation, and/or, during wake-up or activation, the first terminal needs to send the power saving information and indicate dormancy or inactivation. In a case that the SL is configured to indicate that "1" represents wake-up or activation, and to indicate that "0" represents dormancy or inactivation, the first terminal sends the power saving information indicating "0" to the second terminal.

Alternatively, in a case that the target condition includes the first condition, that the first terminal determines, based on the target condition, the transmission of the power saving information in step 201 includes:
determining non-transmission of the power saving information in a case that the first condition is satisfied, where the non-transmission of the power saving information indirectly indicates that the target terminal is dormant or non-active. For example, in a case that a behavior is defined as that dormancy or inactivation is determined by default for not sending the power saving information, the power saving information does not need to be sent in a case that the first condition is satisfied. In another example, in a case that a behavior is defined as that a DRX configuration is valid or is used by default for not sending the power saving information, the power saving information does not need to be sent in a case that the first condition is satisfied. For example, in a case that a behavior is defined as that dormancy or inactivation is determined by default for that no power saving information is received. In another example, in a case that a behavior is defined as that a DRX configuration is valid/used by default for that no power saving information is received.

In another optional embodiment, in a case that the target condition includes a first condition, determining the dormancy or wake-up, or inactivation or activation of the target terminal in step 201 includes:
determining that the target terminal is dormant or non-active in a case that the first condition is satisfied.

Optionally, the first terminal is the receiving terminal, that is, that the receiving terminal is dormant or non-active is determined in a case that the first condition is satisfied.

Optionally, the second terminal is a Model terminal.

Optionally, the first terminal is a Model terminal or a Mode2 terminal, which is not specifically limited herein.

In at least one embodiment of this application, the first condition includes at least one of the following.
1) No resource is available for SL transmission within a first preset time; (or may be referred to as that a resource available for SL transmission does not exist within a first preset time). For example, the control node informs or the first terminal autonomously determines, by using some a priori information, that no resource is available for the SL transmission within the first preset time. Specifically, there is no resource for the first terminal or the second terminal for the SL transmission within the first preset time.
2) No resource that satisfies a first preset requirement is available for SL transmission within a second preset time (or may be referred to as that a resource that satisfies a first preset requirement and is available for SL transmission does not exist within a second preset time). For example, the control node informs or the first terminal autonomously determines, by using some a priori information, that no resource that satisfies the first preset requirement is available for the SL transmission within the second preset time. Specifically, there is no resource that satisfies the first preset requirement for the first terminal or the second terminal for the SL transmission within the second preset time.

Optionally, the first preset requirement is that a quantity of resources available for the SL transmission is greater than a particular threshold.

Optionally, the first preset time and/or the second preset time is one of the following:
one or more active times of the power saving mechanism;
one or more power saving mechanism cycles of the power saving mechanism; or
one or more reservation cycles.

For example, the foregoing power saving mechanism is: at least one of a Uu DRX (for example, an NR Uu DRX and/or an LTE Uu DRX) of the first terminal, an SL DRX of the first terminal, an SL DRX of the second terminal, a power saving monitoring configuration of the first terminal, a power saving monitoring configuration of the second terminal, a resource random selection of the first terminal, and a resource random selection of the second terminal.

3) A timer or a monitoring window for monitoring SL downlink control information (Downlink Control Information, DCI) expires or is invalid.

4) No timer or monitoring window for monitoring SL DCI is obtained. For example, the control node is not configured with a timer or a monitoring window for monitoring SL DCI.

5) A Uu interface of the first terminal is in a non-active time corresponding to a Uu power saving mechanism. For example, the NR Uu DRX enters a non-active time; and/or, the LTE Uu DRX enters a non-active time.

6) A time interval between a current moment of the first terminal and a non-active time corresponding to a Uu power saving mechanism is less than a first threshold. In other words, the Uu interface of the first terminal is about to enter the non-active time corresponding to the Uu power saving mechanism. For example, the NR Uu DRX is about to enter the non-active time; and/or, the LTE Uu DRX is about to enter the non-active time.

7) A Uu interface of the first terminal is dormant or is indicated as dormant, where the dormancy of Uu interface refers to dormancy (dormancy), deactivation (deactivation), or idle (idle), or non-activation (inactive), or power saving mode (power saving mode). For example, the WUS (for example, a DCI format 2-6) of the NR Uu indicates that the first terminal needs to become dormant or does not need to be woken up on the Uu. For example, the DCI of the NR indicates that a particular bandwidth part (Bandwidth Part, BWP) of the first terminal on the Uu is dormant.

8) A Uu interface of the first terminal becomes dormant after a third preset time or is indicated as becoming dormant after a third preset time. In other words, the Uu interface of the first terminal is about to become dormant or is indicated as about to sleep, where the dormancy of Uu interface refers to dormancy (dormancy), deactivation (deactivation), or idle (idle), or non-activation (inactive), or power saving mode (power saving mode); and the third preset time is less than a particular threshold. For example, the NR Uu interface is indicated as dormant or as being about to sleep. In another example, the LTE Uu interface is indicated as dormant or as being about to sleep.

9) A cell, a carrier, or a bandwidth part BWP where SL DCI (the SL DCI may be sent, by the control node, to the first terminal, or to the second terminal) is located is in a in a dormant state or is indicated as in a dormant state. For example, the control node indicates, to the first terminal and/or the second terminal, that the cell, the carrier, or the bandwidth part BWP where the SL DCI is located is in the dormant state.

Optionally, the first terminal and/or the second terminal is a Model terminal.

Optionally, the control node is a base station or a terminal having a scheduling capability or a header terminal (header UE, for example, a header terminal in a terminal group) or a terminal that provides auxiliary information, which is not specifically limited herein.

10) A cell group (for example, a secondary cell group Scell group) to which a cell, a carrier, or a BWP where SL DCI (the SL DCI may be for the first terminal or for the second terminal) is located pertains is in a dormant state or is indicated as in a dormant state.

Optionally, the first terminal and/or the second terminal is a Model terminal.

11) A cell, a carrier, or a BWP where SL DCI (the SL DCI may be for the first terminal or for the second terminal) is located is deactivated.

Optionally, the first terminal and/or the second terminal is a Model terminal.

12) A cell, a carrier, or a BWP where SL DCI (the SL DCI may be for the first terminal or for the second terminal) is located is deactivated after a fourth preset time or is indicated as deactivated after a fourth preset time. In other words, the cell, the carrier, or the BWP where the SL DCI is located is about to be deactivated or is indicated as about to be deactivated; and the fourth preset time is less than a particular threshold.

Optionally, the first terminal and/or the second terminal is a Model terminal.

13) The target terminal switches to a first target control resource.

14) The target terminal switches to a first target control resource after a fifth preset time.

In other words, for 13) and 14), descriptions may alternatively be provided as: the target terminal performs or is about to perform switching of a control resource, and switches to the first target control resource, where the first target control resource is not used for SL DCI transmission, is not used for monitoring of SL DCI, does not support SL DCI, or does not include SL DCI.

Optionally, the control resource may be a search space, that is, switching of a search space is performed; or may be a control resource set (CORESET), that is, switching of a CORESET is performed; or may be a control channel element (Control Channel Element, CCE), that is, switching of a CCE is performed; or may be a physical downlink control channel (Physical Downlink Control Channel, PDCCH) candidate, that is, switching of a PDCCH candidate is performed.

Optionally, in this case, the first terminal and/or the second terminal is a Model terminal.

15) The target terminal switches to a first target BWP, a first target cell, or a first target carrier.

16) The target terminal switches to a first target BWP, a first target cell, or a first target carrier after a sixth preset time.

In other words, for 15) and 16), descriptions may alternatively be provided as: the target terminal performs or is about to perform switching of a BWP, a cell, or a carrier, and switches to the first BWP, the first target cell, or the first target carrier, where the first target BWP, the first target cell, or the first target carrier cannot be used for SL transmission, cannot be re-used for SL transmission, does not include an SL resource, does not support an SL, or does not have an association with a second target BWP, a second target cell, or a second target carrier, where the second target BWP, the second target cell, or the second target carrier can be used for SL transmission, can be re-used for SL transmission, includes an SL resource, or supports an SL.

For example, an uplink UL BWP1 is associated with an SL BWP, and in a case that the target terminal switches to a downlink DL BWP2, and an uplink of the target terminal also automatically switches to an UL BWP2, the UL BWP2 being uncorrelated with the SL BWP.

17) The first terminal fails in detecting a paging wake up signal on a resource or candidate resource for a paging wake up signal (for example, a paging WUS, a machine type communication physical downlink control channel MPDCCH, or an enhanced physical downlink control channel EPDCCH). For example, the first terminal obtains a paging wake up signal configuration, but fails in detecting the paging wake up signal on the candidate resource for a paging wake up signal, and in this case, the first terminal does not need to detect a next paging occasion (Paging occasion, PO).

18) A cell, a carrier, or a BWP where an SL resource is located is deactivated. Optionally, a cell, a carrier, or a BWP where an SL resource obtained by the first terminal and/or the second terminal is located is deactivated.

For example, a cell, a carrier, or a BWP where an SL CG (configuration grant) type (type) 1 resource obtained by the first terminal is located is deactivated. In another example, the control node may schedule a resource on a cell 1 for SL transmission by the first terminal, and the cell 1 is deactivated.

19) A cell, a carrier, or a BWP where an SL resource is located is deactivated after a seventh preset time. Optionally, a cell, a carrier, or a BWP where an SL resource obtained by the first terminal and/or the second terminal is located is about to be deactivated, where the seventh preset time is less than a particular threshold.

20) A quantity of target SL resources within an eighth preset time is less than a second threshold. The second threshold is greater than or equal to 0. Optionally, the eighth preset time is one or more active times.

Optionally, the target SL resource may be a resource in a target resource pool, a resource in any resource pool, an available SL resource, a resource capable of being used for an SL, or a resource that has a corresponding hybrid automatic repeat request acknowledgement (Hybrid Automatic Repeat Request Acknowledgement, HARQ-ACK) resource.

For example, Uu resources indicated by uplink and downlink configuration or slot format indication (Slot Format Indication, SFI) include a resource in a particular On duration, and an overlapped resource is indicated as downlink or flexible (flexible), and in this case, determining of the transmission of the power saving information may be triggered.

In another example, the sending terminal determines in advance, based on the DRX and an overlapping situation of Uu resources, whether to trigger the transmission of the power saving information. For example, a particular on duration is knocked out by a physical random access channel (Physical Random Access Channel, PRACH), a UL CG, a reference signal (Reference Signal, RS), a physical uplink shared channel (Physical Uplink Shared, PUSCH), or a physical uplink control channel (Physical Uplink Control Channel, PUCCH), or there is an excessively small quantity of SL resources in a particular on duration, or there is an excessively small quantity of SL resources in a target resource pool in a particular on duration, which can trigger the transmission of the power saving information.

In another example, the time unit of the DRX cycle is a physical time or a global logic (full logic) time or a logic (logic) time, but in a case that there are excessively few SL resources in a particular on duration or there are excessively few SL resources, in a particular on duration, pertaining to a target resource pool, determining of the transmission of the power saving information is triggered.

In another example, in a case that a particular on duration does not include a resource pool of a PSFCH, but only a transport block (Transport Block, TB) that needs/enables HARQ-ACK feedback temporarily needs to be sent between a sending terminal and a receiving terminal, determining of the transmission of the power saving information is triggered.

21) A first preset communication condition is satisfied. The condition may also be referred to as a condition uncorrelated with a Uu. In a case that two terminals do not need to communicate with each other or do not care about the communication quality, determining of the transmission of power saving information is triggered, so as to indicate that the DRX is dormant or non-active.

For example, that a first preset communication condition is satisfied includes at least one of the following that:
a buffer (buffer) of the first terminal and/or the second terminal is empty;
a distance between the first terminal and the second terminal is greater than a preset distance 1;
a distance between the first terminal and the second terminal is less than a preset distance 2;
the first terminal needs to periodically send an SL WUS;
establishment of a connection between the first terminal and the second terminal fails;
a connection between the first terminal and the second terminal is established;
feedback or response between the first terminal and the second terminal fails;
feedback or response between the first terminal and the second terminal succeeds;
the first terminal has no resource available for transmitting feedback information to the second terminal;
a resource obtained by the first terminal and/or the second terminal does not satisfy a preset requirement;
the first terminal has no transmission associated with the second terminal;
a remaining electric quantity of the first terminal and/or the second terminal is lower than a threshold A; or
the first terminal and/or the second terminal are in a power saving mode.

Optionally, the first terminal and/or the second terminal is a Model terminal.

Optionally, the first terminal and/or the second terminal is a Mode2 terminal.

22) A resource selection mechanism of the target terminal is full sensing (full sensing). The full sensing may be interpreted as continuously performing sensing or continuously sensing within a time window.

23) An SL power saving mechanism of the target terminal is dormant or disabled.

24) An SL power saving mechanism configuration of the target terminal is valid or is used.

25) The target terminal deactivates power saving sensing or resource random selection.

In 22)-25), the target terminal is the first terminal and/or the second terminal, and a possible combination condition in 22)-25) includes at least one of the following:
al) in a case that a resource selection mechanism of UE A (for example, switches to/uses/is activated to) full sensing, and/or, in a case that a DRX of UE B is dormant/deactivated: in this case, the first terminal determines the transmission of the power saving information, which indicates that the DRX of the UE B is dormant/deactivated, and/or, that the UE A (for example, switches to/uses/is activated to) full sensing;
bl) in a case that a resource selection mechanism (for example, switches to/uses/is activated to) UE A is full sensing, and/or, in a case that a DRX of UE B is valid/used: in this case, the first terminal determines the transmission of the power saving information, which indicates that the DRX configuration of the UE B is valid/used (which may be understood as that the transmission of the terminal in this case is restricted by the limitation of the DRX configuration), and/or, the UE A (for example, switches to/uses/is activated to) full sensing;
cl) in a case that UE A deactivates power saving sensing or resource random selection, and/or in a case that a DRX of UE B is dormant/deactivated: in this case, the first terminal determines the transmission of the power saving information, which indicates that the DRX of the UE B is dormant/deactivated, and/or, the UE A deactivates the power saving sensing or resource random selection;
d1) in a case that UE A deactivates power saving sensing or resource random selection, and/or, in a case that a DRX configuration of UE B is valid/used: in this case, the first terminal determines the transmission of the SL WUS, which indicates that the DRX configuration of the UE B is valid/used (which may be understood as that the transmission of the terminal in this case is restricted by the limitation of the DRX configuration), and/or, the UE A deactivates the power saving sensing or the resource random selection.

It should be noted that, the first terminal may be the UE A or the UE B.

It should be noted that, the foregoing conditions 1)-17) are correlated with an NR Uu interface or an LTE Uu interface separately.

For example, the Uu of the first terminal is an NR Uu, and the Uu interface of the first terminal has a corresponding NR Uu DRX. In this case, the NR Uu interface of the first terminal may need to remain dormant, so that the control node does not schedule the first terminal to perform SL transmission, or the NR control node has no resource to be provided to the first terminal for SL transmission within a period of time. Optionally, in the foregoing case, the first terminal is a sending terminal or a receiving terminal. Preferably, the first terminal is a sending terminal, for example, a Model terminal. In this case, the second terminal does not need to always remain in an active state to attempt to receive and monitor. Therefore, by triggering the determining, by the first terminal, the transmission of the power saving information, the second terminal may be informed, so that the second terminal may sleep in a subsequent time. Alternatively, in a case that the first terminal is a receiving terminal, for example, a Mode2 terminal within a coverage, determining, by the first terminal, the transmission of the power saving information may be triggered, to inform the second terminal that: the first terminal may be dormant in a next time, and the second terminal may need to avoid transmission to the first terminal in a next active time.

In another example, the Uu of the first terminal is an LTE Uu, and the Uu interface of the first terminal has a corresponding LTE Uu DRX. In this case, the LTE Uu interface of the first terminal may need to remain dormant, and in a case that the SL DRX of the first terminal remains in an active state, good power saving cannot be guaranteed. A possible power saving method includes: maintaining an SL DRX active time and a Uu DRX active time of the first terminal aligned or overlapped, to implement internal coordination, and informing the second terminal that: the first terminal may be dormant in a next time, and the second terminal may need to avoid transmission to the first terminal in a next active time.

For the conditions of 18)-20), SL resources of the first terminal may be deactivated (that is, invalid), and in this case, the first terminal can no longer use these resources to continue the transmission to the second terminal. Optionally, in the foregoing case, the first terminal is a sending terminal or a receiving terminal. Preferably, the first terminal is a sending terminal, for example, a Model terminal. Therefore, by triggering the determining, by the first terminal, the transmission of the power saving information, the second terminal may be informed of that the second terminal may sleep in a subsequent time. Alternatively, in a case that the first terminal is a receiving terminal, for example, a Mode2 terminal within a coverage, determining of the transmission of the power saving information may be triggered to inform the second terminal that: the first terminal is to be dormant in a next time; and subsequently the second terminal may need to transmission to the first terminal in a next active time.

In another optional embodiment, in a case that the target condition includes a second condition, that the first terminal determines, based on the target condition, the transmission of the power saving information in step 201 includes:
transmitting, by the first terminal, the power saving information in a case that the second condition is satisfied, where the power saving information indicates that the target terminal is wake-up or active. For example, the power saving information indicates that the first terminal is in an wake-up state or an active state, or the power saving information indicates that the second terminal enters an wake-up state or an active state.

For example, the power saving information may be configured to indicate dormancy or inactivation, and/or, during wake-up or activation, the first terminal needs to send the power saving information and indicate dormancy or inactivation. In a case that the SL is configured to indicate that "1" represents wake-up or activation, and to indicate that "0" represents dormancy or inactivation, the first terminal sends the power saving information indicating "1" to the second terminal.

Alternatively, in a case that the target condition includes the second condition, that the first terminal determines, based on the target condition, the transmission of the power saving information in step 201 includes:
determining non-transmission of the power saving information in a case that the second condition is satisfied, where the non-transmission of the power saving information indirectly indicates that the target terminal is wake-up or active. For example, in a case that a behavior is defined as that wake-up or activation is determined by default for not sending the power saving information, the power saving information does not need to be sent in a case that the first condition is satisfied. In another example, in a case that a behavior is defined as that there is no DRX configuration, a DRX configuration is invalid, or a DRX configuration is not used by default for not sending the power saving information, the power saving information does not need to be sent in a case that the first condition is satisfied. In another example, a behavior is defined as that wake-up or activation is determined by default for that no power saving information is received. In another example, a behavior is defined as that there is no DRX configuration, a DRX configuration is invalid, or a DRX configuration is not used by default for that no power saving information is received.

In another optional embodiment, in a case that the target condition includes a second condition, determining the dormancy or wake-up, or inactivation or activation of the target terminal in step 201 includes:
determining that the target terminal is wake-up or active in a case that the second condition is satisfied.

Optionally, the first terminal is the receiving terminal, that is, that the receiving terminal is dormant or non-active is determined in a case that the first condition is satisfied.

Optionally, the second terminal is a Model terminal, and the first terminal is a Model terminal or a Mode2 terminal, which is not specifically limited herein.

In at least one embodiment of this application, the second condition includes at least one of the following.

31) A resource is available for SL transmission within a tenth preset time (or may be referred to as a resource available for SL transmission exists within a tenth preset time). For example, the control node informs or the first terminal autonomously determines, by using some a priori information, that a resource is available for the SL transmission within the tenth preset time. Specifically, there is a resource for the first terminal or the second terminal for the SL transmission within the tenth preset time.

32) A resource that satisfies a second preset requirement is available for SL transmission within an eleventh preset time (or may be referred to as that a resource that satisfies a second preset requirement and is available for SL transmission does not exist within an eleventh preset time). For example, the control node informs or the first terminal autonomously determines, by using some a priori information, that a resource that satisfies the second preset requirement is available for the SL transmission within the eleventh preset time. Specifically, there is a resource that satisfies the first preset requirement for the first terminal or the second terminal for the SL transmission within the eleventh preset time.

Optionally, the second preset requirement is that a quantity of resources available for the SL transmission is greater than a particular threshold.

Optionally, the tenth preset time and/or the eleventh preset time is one of the following:
one or more active times of the power saving mechanism;
one or more power saving mechanism cycles of the power saving mechanism; or
one or more reservation cycles.

For example, the foregoing power saving mechanism is: at least one of a Uu DRX (for example, an NR Uu DRX and/or an LTE Uu DRX) of the first terminal, an SL DRX of the first terminal, an SL DRX of the second terminal, a power saving monitoring configuration of the first terminal, a power saving monitoring configuration of the second terminal, a resource random selection of the first terminal, and a resource random selection of the second terminal.

33) A timer or a monitoring window for monitoring SL DCI is started, restarted, or running. For example, the control node is configured with a timer or a monitoring window for monitoring SL DCI.

34) A timer or a monitoring window for monitoring SL DCI is obtained.

35) A Uu interface of the first terminal is at a wake-up time or an active time corresponding to a Uu power saving mechanism. For example, an NR Uu DRX enters an active time or a wake-up time; and/or, an LTE Uu DRX enters an active time or a wake-up time.

36) A time interval between a current moment of the first terminal and a wake-up time corresponding to a Uu power saving mechanism is less than a third threshold. In other words, the Uu interface of the first terminal is about to enter the wake-up time corresponding to the Uu power saving mechanism. For example, an NR Uu DRX is about to enter a wake-up time; and/or, an LTE Uu DRX is about to enter a wake-up time.

37) A time interval between a current moment of the first terminal and an active time corresponding to a Uu power saving mechanism is less than a fourth threshold. In other words, the Uu interface of the first terminal is about to enter the active time corresponding to the Uu power saving mechanism. For example, an NR Uu DRX is about to enter an active time; and/or, an LTE Uu DRX is about to enter an active time.

38) A Uu interface of the first terminal is wake-up or is indicated as wake-up. For example, an NR Uu interface is wake-up or is indicated as wake-up. In another example, an LTE Uu interface is wake-up or is indicated as wake-up.

39) A Uu interface of the first terminal is active or is indicated as activated. For example, an NR Uu interface is activated or is indicated as activated. In another example, an LTE Uu interface is activated or is indicated as activated.

40) A Uu interface of the first terminal is wake-up after a twelfth preset time or is indicated as wake-up after a twelfth preset time. For example, an NR Uu interface is about to wake up or is indicated as about to wake up. In another example, an LTE Uu interface is about to wake up or is indicated as about to wake up.

41) A Uu interface of the first terminal is activated after a thirteenth preset time or is indicated as activated after a thirteenth preset time. For example, an NR Uu interface is about to be activated or is indicated as about to be activated. In another example, an LTE Uu interface is about to be activated or is indicated as about to be activated.

For example, a WUS (for example, a DCI format 2-6) of the NR Uu indicates that the Uu DRX of the first terminal needs to be woken up or does not need to sleep.

42) A cell, a carrier, or a bandwidth part BWP where SL DCI (the SL DCI may be sent to the first terminal, or to the second terminal) is located is indicated as in a non-dormant state. For example, the control node indicates, to the first terminal and/or the second terminal, that the cell, the carrier, or the bandwidth part BWP where the SL DCI is located is in the non-dormant state.

43) A cell, a carrier, or a bandwidth part BWP where SL DCI (the SL DCI may be sent to the first terminal, or to the second terminal) is located is indicated as in a dormant state. For example, the control node does not indicate, to the first terminal and/or the second terminal, that the cell, the carrier, or the bandwidth part BWP where the SL DCI is located is in the dormant state.

44) A cell group (for example, a secondary cell group Scell group) to which a cell, a carrier, or a BWP where SL DCI (the SL DCI may be for the first terminal or for the second terminal) is located pertains is in a non-dormant state. For example, the control node indicates, to the first terminal and/or the second terminal, that the cell group to which the cell, the carrier, or the bandwidth part BWP where the SL DCI is located pertains is in a non-dormant state.

45) A cell group to which a cell, a carrier, or a BWP where SL DCI (the SL DCI may be sent to the first terminal, or to the second terminal) is located pertains is not indicated as in a dormant state. For example, the control node does not indicate, to the first terminal and/or the second terminal, that the cell group to which the cell, the carrier, or the bandwidth part BWP where the SL DCI is located pertains is in the dormant state.

46) A cell, a carrier, or a BWP where SL DCI (the SL DCI may be for the first terminal or for the second terminal) is located is wake-up.

47) A cell, a carrier, or a BWP where SL DCI (the SL DCI may be for the first terminal or for the second terminal) is located is activated.

48) A cell, a carrier, or a BWP where SL DCI (the SL DCI may be for the first terminal or for the second terminal) is located is wake-up after a fourteenth preset time or is indicated as wake-up after a fourteenth preset time.

49) A cell, a carrier, or a BWP where SL DCI (the SL DCI may be for the first terminal or for the second terminal) is located is activated after a fifteenth preset time or is indicated as deactivated after a fifteenth preset time.

Optionally, for 35)-49), the first terminal and/or the second terminal is a Model terminal.

50) The target terminal switches to a second target control resource.

51) The target terminal switches to a second target control resource after a sixteenth preset time.

In other words, for 50) and 51), descriptions may alternatively be provided as: the target terminal performs or is about to perform switching of a control resource, and switches to a second target control resource, where the second target control resource can be used for SL DCI transmission, can be used for monitoring of SL DCI, can support SL DCI, or includes SL DCI. The target terminal is at least one of the first terminal and the second terminal.

Optionally, the control resource may be a search space, that is, switching of a search space is performed; or may be a control resource set (CORESET), that is, switching of a CORESET is performed; or may be a control channel element (Control Channel Element, CCE), that is, switching of a CCE is performed; or may also be a PDCCH candidate, that is, PDCCH candidate switching is performed.

Optionally, the first terminal and/or the second terminal is a Model terminal.

52) The target terminal switches to a third target BWP, a third target cell, or a third target carrier.

53) The target terminal switches to a third target BWP, a third target cell, or a third target carrier after a seventeenth preset time.

In other words, for 52) and 53), descriptions may alternatively be provided as: the target terminal performs or is about to perform switching of a BWP, a cell, or a carrier, and switches to the third BWP, the third target cell, or the third target carrier, where the third target BWP, the third target cell, or the third target carrier can be used for SL transmission, can be re-used for SL transmission, includes an SL resource, supports an SL, or has an association with a fourth target BWP, a fourth target cell, or a fourth target carrier; and the fourth target BWP, the fourth target cell, or the fourth target carrier can be used for SL transmission, can be re-used for SL transmission, includes an SL resource, or supports an SL, where the target terminal is at least one of the first terminal and the second terminal.

54) The first terminal exits a power saving mode, for example, exits a power saving mode.

55) The first terminal exits a power saving mode after an eighteenth preset time, for example, is about to exit a power saving mode.

56) The first terminal needs to send target uplink data. For example, the target uplink data is any uplink data, or specific uplink data, such as timing information and/or MO data and/or positioning information.

57) The first terminal needs to update location, for example, to perform periodic location updating.

58) The first terminal does not obtain a paging wake up signal (paging WUS) configuration.

59) The first terminal detects at least one paging wake up signal on a candidate resource for a paging wake up signal. For example, the first terminal acquires a paging wake up signal configuration and detects at least one paging wake up signal on a candidate resource for a paging wake up signal. In this case, the first terminal needs to detect a next paging occasion PO.

60) A cell, a carrier, or a BWP where an SL resource is located is activated. Optionally, the cell, the carrier, or the BWP where the SL resource obtained by the first terminal and/or the second terminal is located is activated.

For example, a cell, a carrier, or a BWP where an SL CG type1 resource obtained by the first terminal is located is activated. In another example, the control node may schedule a resource on a cell 1 for SL transmission by the first terminal, and the cell 1 is activated.

61) A cell, a carrier, or a BWP where an SL resource is located is activated after a nineteenth preset time. Optionally, a cell, a carrier, or a BWP where an SL resource obtained by the first terminal and/or the second terminal is located is about to be activated, where the nineteenth preset time is less than a particular threshold.

62) A quantity of target SL resources within a twentieth preset time is greater than or equal to a fifth threshold, where the fifth threshold is greater than or equal to 0. Optionally, the twentieth preset time is one or more active times.

Optionally, the target SL resource may be a resource in a target resource pool, a resource in any resource pool, an available SL resource, a resource capable of being used for an SL, or a resource that has a corresponding HARQ-ACK resource.

63) A second preset communication condition is satisfied. The condition may also be referred to as a condition uncorrelated with a Uu. In a case that two terminals need to communicate with each other or require a communication quality, determining of the transmission of the power saving information is triggered, so as to indicate that the DRX is wake-up or active.

For example, that a second preset communication condition is satisfied includes at least one of the following that:
a buffer (buffer) of the first terminal and/or the second terminal is not empty;
a distance between the first terminal and the second terminal is less than a preset distance 3;
a distance between the first terminal and the second terminal is greater than a preset distance 4;
the first terminal and/or the second terminal does not need to periodically send an SL WUS;
a connection between the first terminal and the second terminal is successfully established;
feedback or response between the first terminal and the second terminal succeeds;
the first terminal has a resource available for transmitting feedback information to the second terminal;
a resource obtained by the first terminal and/or the second terminal satisfies a preset requirement; or
the first terminal has transmission associated with the second terminal.

Optionally, the first terminal and/or the second terminal is a Model terminal.

Optionally, the first terminal and/or the second terminal is a Mode2 terminal.

64) A resource selection mechanism of the target terminal is power saving sensing or resource random selection.

65) An SL power saving mechanism of the target terminal is wake-up or activated.

66) The target terminal does not obtain an SL power saving mechanism configuration.

67) An SL power saving mechanism configuration of the target terminal is invalid or is not used.

68) A resource selection mechanism of the target terminal is a full sensing (full sensing) resource selection mechanism.

In 64)-68), the target terminal is the first terminal and/or the second terminal, and a possible combination condition in 64)-68) includes at least one of the following:
a2) in a case that the resource selection mechanism of UE A (switches to/uses/is activated to) power saving sensing or resource random selection, and/or, in a case that the DRX of UE B is wake-up/activated, the first terminal determines the transmission of the power saving information, indicates the DRX of the UE B as being wake-up/activated, and/or, the UE A (switches to/uses/is activated to) power saving sensing or resource random selection;
b2) in a case that the resource selection mechanism of UE A (switches to/use/is activated to) power saving sensing or resource random selection, and/or, UE B does not obtain a DRX/DRX configuration invalid/is not used, the first terminal determines the transmission of the power saving information, which indicates that the UE B has not obtained the DRX/the DRX configuration is invalid/not used (which may be understood as that the transmission by the terminal in this case is not limited to the restriction of the DRX configuration), and/or, the UE A (switches to/uses/is activated to) power saving sensing or resource random selection;
c2) in a case that UE A activates full sensing, and/or, in a case that the DRX of UE B is wake-up/activated, the first terminal determines the transmission of the power saving information, which indicates that the DRX of the UE B is wake-up/activated, and/or, the UE A activates full sensing;
d2) in a case that UE A activates full sensing, and/or, UE B has not obtained a DRX/a DRX configuration is invalid/is not used, the first terminal determines the transmission of the power saving information, which indicates that the UE B has not obtained the DRX/the DRX configuration is invalid/not used (which may be understood as that the transmission of the terminal in this case is restricted by the limitation of the DRX configuration), and/or the UE A activates full sensing.

It should be noted that, the first terminal may be the UE A or the UE B.

It should be noted that, the foregoing conditions 31)-59) are correlated with an NR Uu interface or an LTE Uu interface separately.

For example, the Uu of the first terminal is an NR Uu, and the Uu interface of the first terminal has a corresponding NR Uu DRX. In this case, the NR Uu interface of the first terminal may need to remain active, so that the control node does not schedule the first terminal to perform SL transmission, or the NR control node has a resource to be provided to the first terminal for SL transmission within a period of time. Optionally, in the foregoing case, the first terminal is a sending terminal or a receiving terminal. Preferably, the first terminal is a sending terminal, for example, a Model terminal. In this case, the second terminal accordingly needs to maintain in an active state to attempt to receive and monitor. Therefore, by triggering the determining, by the first terminal, the transmission of the power saving information, the second terminal may be informed, so that the second terminal may be activated in a subsequent time. Alternatively, in a case that the first terminal is a receiving terminal, for example, a mode2 terminal within a coverage, determining, by the first terminal, the transmission of the power saving information may be triggered, to inform the second terminal that: the first terminal may be activated in a next time, and the second terminal may perform transmission to the first terminal in a next active time.

In another example, the Uu of the first terminal is an LTE Uu, and the Uu interface of the first terminal has a corresponding LTE Uu DRX. In this case, the LTE Uu interface of the first terminal may remain active. A possible power saving method includes: maintaining an SL DRX active time and a Uu DRX active time of the first terminal aligned or overlapped, to implement internal coordination, and informing the second terminal that: the first terminal may be activated in a next time, and the second terminal may perform transmission to the first terminal in a next active time.

For the conditions of 60)-62), SL resources of the first terminal may be activated, and in this case, the first terminal may use these resources to continue the transmission to the second terminal. Optionally, in the foregoing case, the first terminal is a sending terminal or a receiving terminal. Preferably, the first terminal is a sending terminal, for example, a Model terminal. Therefore, by triggering the determining, by the first terminal, the transmission of the power saving information, the second terminal may be informed of that the second terminal may be activated in a subsequent time. Alternatively, in a case that the first terminal is a receiving terminal, for example, a mode2 terminal within a coverage, determining of the transmission of the power saving information may be triggered to inform the second terminal that: the first terminal may be activated in a next time, and the second terminal may perform transmission to the first terminal in a next active time.

It should be further noted that, the method for obtaining any information mentioned in the embodiments of this application may include:
obtaining information according to at least one of a protocol pre-defined/pre-configured/base station configured/other user indicated/other user recommended/other user scheduled/other user configured method and the like; or
obtaining a rule according to at least one of a protocol pre-defined/pre-configured/base station configured/other user indicated/other user recommended/other user scheduled/other user configured method and the like, and obtaining information based on the rule.

Following the foregoing embodiments, in at least one optional embodiment of this application, the method further includes:
sending, by the first terminal, second information to a control node, where the second information indicates at least one of the following:
indicating that the first terminal satisfies the target condition, for example, in a case that the second information is 1 bit, the value of being 1 indicating that UE1 satisfies the target condition; in another example, sending the second information indicating that the first terminal satisfies the target condition;
indicating related information of the target condition that the first terminal satisfies; for example, in a case that the first terminal finds that the target SL resource is insufficient, the second information indicating that the target SL resource is insufficient;
a transmission resource request for power saving information;
a scheduling request (Scheduling Request, SR);
a buffer status report (Buffer Status Report, BSR).

In a case that the first terminal sends an SR/BSR, the base station may schedule a new resource to the terminal, and the terminal may send the power saving information on the new resource, where the power saving information may be transmitted on a sidelink control information SCI and/or a physical sidelink shared channel PSSCH. In this case, the target condition may also be regarded as a condition for triggering the first terminal to send the SR/BSR, or may also be regarded as a condition for triggering the base station to allocate the power saving information resource by using the SR/BSR.

Optionally, the BSR indicates that the buffer is empty.

It should be noted that, in this embodiment of this application, a sequence in which the first terminal transmits the power saving information and the first terminal sends second information to the control node is not limited. For example, after the control node obtains the second information, the control node allocates the power saving information resource to the first terminal.

In an optional embodiment, the first information includes at least one of the following:
first indication information, used for indicating the first terminal to transmit the power saving information, where the power saving information indicates that the target terminal is dormant or non-active;
second indication information, used for indicating the first terminal to transmit the power saving information, where the power saving information indicates that the target terminal is wake-up or active;
third indication information, for indicating a resource for transmitting the power saving information; for example, the third indication information indicating a resource for scheduling and sending the power saving information indicated by the first indication information; in another example, the third indication information indicating a resource for scheduling and sending the power saving information indicated by the second indication information;
fourth indication information, used for indicating that the first terminal does not transmit the power saving information;
fifth indication information, for indicating that the first terminal is wake-up or active; or
sixth indication information, for indicating that the first terminal is dormant or non-active.

In this embodiment of this application, the control node explicitly controls the SL DRX or the power saving information of the first terminal. For example, the control node directly schedules the first terminal to transmit the power saving information, to indicate that the receiving terminal is wake-up or dormant.

Optionally, the first information is a terminal dedicated PDCCH, a group common PDCCH, or higher layer signaling (for example, a radio resource control (Radio Resource Control, RRC) or a media access control (Medium Access Control, MAC) control element (Control Element, CE)).

For example, determining, by the first terminal and based on the first information of the control node, the method for determining the transmission of the power saving information specifically includes at least one of the following:
sending, by the control node, the first information to the first terminal, and determining, by the first terminal and based on the first information, the transmission of the power saving information; or
scheduling, activating, or deactivating, by the control node, the power saving information or the power saving information resource by directly using the first information.

In another optional embodiment, the first information is at least one of the following:
SL DCI, which may be understood as that the control node schedules the first terminal to send the power saving information;
an SL configuration grant (CG), which may be understood as that the control node schedules the first terminal to send the power saving information;
power saving information of a Uu interface, which may be understood as that the Uu power saving information may also trigger the first terminal to determine the transmission of the power saving information;
signaling carrying a dormancy indication, which may be understood as that the Uu signaling carrying a dormancy indication (dormancy indication) triggers the first terminal to determine the transmission of the power saving information;
signaling for activating or deactivating a BWP;
signaling for activating or deactivating a cell;
signaling for activating or deactivating a carrier.

The first terminal determines, based on the first information, the transmission of the power saving information, which specifically includes at least one of the following.

### A. Transmission of power saving information (indicated by the first information indicates).

For example, in a case that the power saving information is designed to indicate dormancy/inactivation, and/or, wake-up/activation, the first terminal needs to send the power saving information and indicate dormancy/inactivation.

For example, in a case that the power saving information is designed to indicate receipt/sensing/activation, the first terminal needs to send the power saving information and indicate receipt/sensing/activation.

### B. Non-transmission of power saving information (indicated by the first information).

For example, in a case that a behavior is defined as that dormancy/inactivation is determined by default in order not to send the power saving information, the power saving information does not need to be sent.

For example, in a case that a behavior is defined as that receipt/sensing/activation is determined by default in order not to send the power saving information, the power saving information does not need to be sent.

In another optional embodiment, determining the transmission of power saving information of the first terminal includes:
determining transmission of the power saving information on a first resource, where the first resource includes at least one of the following:
a resource randomly selected by the first terminal;
a resource obtained by the first terminal through sensing;
a resource recommended or indicated to the first terminal by another terminal;
a resource of the power saving information requested by the first terminal to a control node, for example, the resource requested after sending the second information;
a resource scheduled by the SL DCI obtained by the first terminal;
an SL configuration grant resource obtained by the first terminal, for example, in a case that the sending terminal sends the power saving information in a resource of an existing SL configuration grant CG or SL dynamic grant DG, the power saving information may be transmitted in SCI and/or a PSSCH;
a resource configured by a control node for the first terminal and for transmitting the power saving information; or
a periodic or semi-static resource of power saving information configured by a control node.

It should be noted that, the resource of the power saving information may be located before the active time of the power saving mechanism, or within the active time, or after the active time, which is not specifically limited herein.

It should be further noted that, the power saving information includes at least one of the following.

First type: the transmission of the power saving information may not directly accept control by the control node.

Similar to a physical sidelink feedback channel PSFCH, the base station does not need to specifically reschedule a resource, and in this case, a periodic or semi-static resources previously configured by the control node may be used.

Second type: the transmission of the power saving information may be controlled by the control node.

For example, in a case that the power saving information adopts the sidelink control information SCI, the control node needs to allocate SCI resources every time the power saving information is transmitted, and then the user can send the power saving information.

In at least one embodiment of this application, the SL power saving mechanism includes at least one of the following:
an SL DRX of the first terminal, where, optionally, the transmission of the power saving information of the first terminal is to inform other terminals of: a DRX state of the first terminal; or
an SL DRX of the second terminal, where, optionally, the transmission of the power saving information of the first terminal is to control a DRX state of the second terminal; optionally, the second terminal is (one or more or all) peer terminals of the first terminal, where the peer terminal refers to a terminal that communicates with the first terminal, a terminal that receives a signal/channel of the first terminal, a terminal that sends a signal/channel to the first terminal, or a terminal that establishes a connection or group with the first terminal;
power saving sensing (partial sensing) of the first terminal, where the transmission of the power saving information of the first terminal is to inform other terminals of: a sensing state of the first terminal, where the activation/deactivation of the power saving sensing may be understood as whether to use the power saving sensing, for example, full sensing needs to be used after deactivation, and power saving sensing is used after activation;
power saving sensing of the second terminal, where the transmission of the power saving information of the first terminal is to control the sensing state of the second terminal, where the activation/deactivation of the power saving sensing may be understood as whether to use the power saving sensing, for example, full sensing needs to be used after deactivation, and power saving sensing is used after activation;
resource random selection of the first terminal, where the activation/deactivation of the resource random selection may be understood as whether to use the resource random selection, for example, full sensing or power saving sensing needs to be used after deactivation, and resource random selection is used after activation;
resource random selection of the second terminal, where the activation/deactivation of the resource random selection may be understood as whether to use the resource random selection, for example, full sensing or power saving sensing needs to be used after deactivation, and resource random selection is used after activation.

It should be noted that, the BWP mentioned in the embodiments of this application may be an upstream BWP, a downstream BWP, or an SL BWP. The SL DCI mentioned in this embodiment of this application is used for scheduling, activating, or deactivating an SL resource or an SL configuration, for example, DCI format 3-0 and/or DCI format 3-1, or DCI scrambled by SL-related radio network temporary identity (Radio Network Temporary Identity, RNTI), for example, an SL RNTI, or an SL-CS-RNTI.

### Example 1: a resource selection mechanism triggers an SL WUS

In a case that UE A (for example, a sending UE) switches to/uses power saving sensing (partial sensing) or resource random selection, UE B (for example, a receiving UE) remains in the active state, or a DRX configuration of UE B is invalid, or UE B does not obtain a DRX configuration;
and/or,
in a case that UE B uses a DRX mechanism or a DRX configuration is valid, UE A uses full sensing (full sensing).

Specifically, optionally, in a case that the UE A switches to/uses/activates partial sensing or random selection, the UE A determines transmission of an SL WUS, indicates that the UE A uses/activates the partial sensing, or indicates that the UE B needs to remain in the active state or that the DRX is invalid.

Specifically, optionally, in a case that the UE B remains in the active state or does not obtain a DRX configuration or the DRX configuration is invalid, the UE B determines transmission of an SL WUS, indicates that the UE A uses/activates the partial sensing or the resource random selection, or indicates that the UE B remains in the active state or does not obtain a DRX configuration or that the DRX configuration is invalid.

Specifically, optionally, in a case that the UE A switches to/uses/activates full sensing, the UE A determines transmission of an SL WUS, indicates that the UE A uses/activates the full sensing, or indicates that the UE B uses the DRX or the DRX is valid.

Specifically, optionally, the UE B uses the DRX or the DRX is valid, the UE B determines transmission of an SL WUS, indicates that the UE A uses/activates the full sensing, or indicates that UE B uses the DRX or the DRX is valid.

Specifically, optionally, in a case that the UE A does not use/deactivates the partial sensing or the resource random selection, the UE A determines transmission of an SL WUS, indicates that the UE A does not use/deactivate partial the sensing or the resource random selection, or indicates that the UE B uses the DRX or the DRX is valid.

Specifically, optionally, the UE B uses the DRX or the DRX is valid, the UE B determines transmission of an SL WUS, indicates that the UE A does not use/deactivate the partial sensing or the resource random selection, or indicates that the UE B uses the DRX or the DRX is valid.

The first terminal may be the UE A or the UE B.

### Example 2: a base station directly controls an SL DRX

Assuming that UE1 and UE2 are within a coverage of a base station and that the base station does not schedule the UE1 for sending (for example, to UE2) for a period of time, optionally, first information may be sent to the UE1 to indicate that the UE1 sleeps/is deactivated in a next time, so as to save power. Optionally, first information may be sent to the UE2 to indicate that the UE2 sleeps/is deactivated in a next time, so as to save power.

Assuming that UE1 and UE2 are within a coverage of a base station and that the base station schedules the UE1 for sending (for example, to UE2) for a period of time, optionally, first information may be sent to the UE1 to indicate that the UE1 is wake-up/deactivated in a next time, so as to ensure the performance. Optionally, the first information may be sent to the UE2 to indicate that UE2 is wake-up/activated at a next time, so as to ensure the performance.

In the embodiments of this application, by indirectly controlling transmission of the power saving information by a control node, or by adjusting the transmission of the power saving information based on a predefined target condition, states of the first terminal and/or the second terminal on the sidelink can be adjusted, to avoid unnecessary power consumption of the terminal, thereby achieving the purpose of power saving of the terminal.

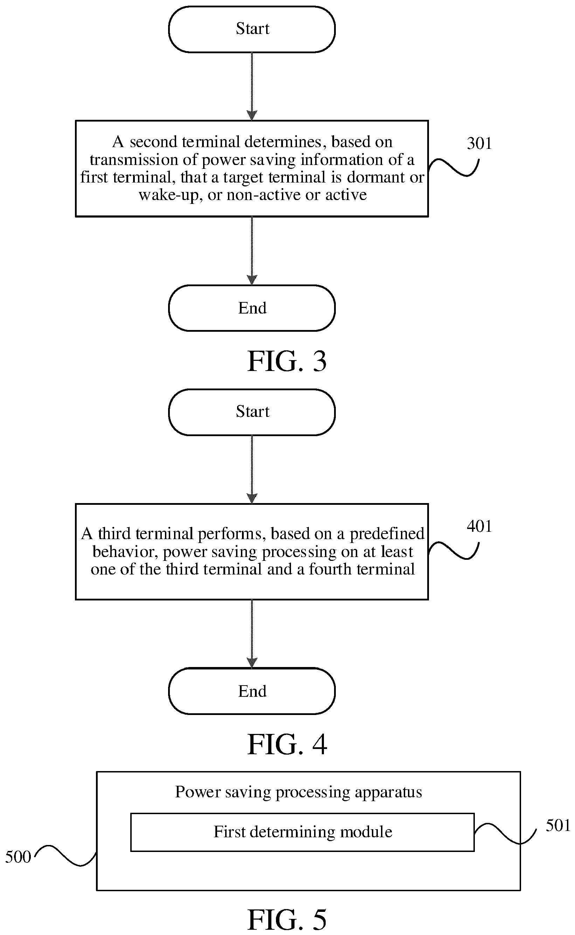

As shown in FIG. 3, an embodiment of this application further provides a power saving processing method, including the following steps.

Step 301: a second terminal determines, based on transmission of power saving information of a first terminal, that a target terminal is dormant or wake-up, or non-active or active, where the target terminal includes: the second terminal, and/or, the first terminal for performing sidelink communication with the second terminal.

In the embodiments of this application, "transmission" refers to sending or receiving, that is, the transmission of the power saving information of the first terminal includes: at least one of sending of the power saving information of the first terminal, receiving of the power saving information of the first terminal, the first terminal not transmitting the power saving information, and the first terminal not receiving the power saving information.

It should be noted that, the dormancy or wake-up, or inactivation or activation of the first terminal (or the second terminal) mentioned in the embodiments of this application includes:
1. a case correlated with an SL power saving mechanism, which can be interpreted as dormancy or wake-up, or inactivation or activation of an SL power saving mechanism of the first terminal, or dormancy or wake-up, or inactivation or activation of an SL power saving mechanism of the second terminal;
2. a case uncorrelated with whether there is an SL power saving mechanism, but to distinguish whether some behaviors of the terminal can be performed normally, for example, in a case that the first terminal is activated or woken up, a corresponding behavior can be performed; and in a case that the first terminal is dormant or deactivated, a corresponding behavior cannot be performed.

The SL power saving mechanism may be SL DRX or SL power saving sensing (sensing), and the power saving sensing may be partial sensing (partial sensing), or may be some simplified, short, or aperiodic, or triggered sensing.

The SL DRX may be used to control sensing, measuring, monitoring, and/or transmission (the transmission mentioned in this application is receiving or sending) of the target object by the terminal. The target object includes at least one of the following: a control channel, a control signal, a data channel, a data signal, a reference signal, a feedback signal, a feedback channel, a request message, and a response message.

The power saving sensing may be interpreted as a partial sensing mechanism, including a sensing window (sensing window) and a selection window (selection window).

It should be noted that, the "power saving information" mentioned in the embodiments of this application may be an SL wake up signal (Wake Up Single, WUS), which may also be referred to as: state notification information, sleep notification (sleep notification) information, deactivation notification (off notification) information, wake notification (wake notification) information, activation notification (on notification) information; the details are not limited herein.

In an optional embodiment, step 301 includes:
in a case that the second terminal receives the power saving information transmitted by the first terminal, determining that the target terminal is dormant or non-active, where
the power saving information indicates that the target terminal is dormant or non-active; for example, the power saving information indicating that the first terminal is in a dormant state or an inactive state); in another example, the power saving information indicating that the second terminal enters a dormant state or an inactive state.

For example, the power saving information may be configured to indicate dormancy or inactivation, and/or, during wake-up or activation, the first terminal needs to send the power saving information and indicate dormancy or inactivation. In a case that the SL is configured to indicate that "1" represents wake-up or activation, and to indicate that "0" represents dormancy or inactivation, the first terminal sends the power saving information indicating "0" to the second terminal.

In another optional embodiment, step 301 includes:
in a case that the second terminal does not receive the power saving information transmitted by the first terminal, determining, based on a predefined rule, that the target terminal is dormant or non-active.

The non-transmission of the power saving information indirectly indicates that the target terminal is dormant or non-active. For example, in a case that a predefined rule defines that dormancy or inactivation is determined by default for not sending the power saving information, the power saving information does not need to be sent in a case that the first condition is satisfied. In another example, in a case that a predefined rule defines that a DRX configuration is valid or is used by default for not sending the power saving information, the power saving information does not need to be sent in a case that the first condition is satisfied. In another example, a predefined rule defines that dormancy or inactivation is determined by default in a case that no power saving information is received. In another example, a predefined rule defines that a DRX configuration is determined to be valid or used by default in a case that no power saving information is received.

In another optional embodiment, step 301 includes:
in a case that the second terminal receives the power saving information transmitted by the first terminal, determining that the target terminal is wake-up or active, where
the power saving information indicates that the target terminal is wake-up or active, for example, the power saving information indicating that the first terminal is in an wake-up state or an active state; or, the power saving information indicating that the second terminal enters an wake-up state or an active state.

For example, the power saving information may be configured to indicate dormancy or inactivation, and/or, during wake-up or activation, the first terminal needs to send the power saving information and indicate dormancy or inactivation. In a case that the SL is configured to indicate that "1" represents wake-up or activation, and to indicate that "0" represents dormancy or inactivation, the first terminal sends the power saving information indicating "1" to the second terminal.

In another optional embodiment, step 301 includes:
in a case that the second terminal does not receive the power saving information transmitted by the first terminal, determining, based on a predefined rule, that the target terminal is wake-up or active.

For example, in a case that a predefined rule defines that wake-up or activation is determined by default for not sending the power saving information, the power saving information does not need to be sent in a case that the first condition is satisfied. In another example, in a case that a predefined rule defines that there is no DRX configuration, a DRX configuration is invalid, or a DRX configuration is not used by default for not sending the power saving information, the power saving information does not need to be sent in a case that the first condition is satisfied. In another example, a predefined rule defines that wake-up or activation is determined by default in a case that no power saving information is received. In another example, a predefined rule defines that there is no DRX configuration, a DRX configuration is invalid, or a DRX configuration is not used by default for that no power saving information is received.

In the embodiments of this application, by controlling transmission of the power saving information by a control node, or by adjusting the transmission of the power saving information based on a predefined target condition, states of the first terminal and/or the second terminal on the sidelink can be adjusted, to avoid unnecessary power consumption of the terminal, thereby achieving the purpose of power saving of the terminal.

As shown in FIG. 4, an embodiment of this application further provides a power saving processing method, including the following steps.

Step 401: a third terminal performs, based on a predefined behavior, power saving processing on at least one of the third terminal and a fourth terminal.

In an optional embodiment, the predefined behavior includes any one of the following:
a first behavior of not transmitting the power saving information within a first target time;
a second behavior that the power saving information is not received within a second target time;
a third behavior that first information sent by a control node is not received, where the first information indicates that the third terminal is dormant or non-active, or the first information indicates that the third terminal is wake-up or active; or
a fourth behavior that first information sent by a control node is received, where the first information indicates that the third terminal is dormant or non-active, or the first information indicates that the third terminal is wake-up or active.

Accordingly, step 401 includes:
determining that the third terminal is dormant or non-active in a case that the predefined behavior is satisfied;
   and/or,
indicating that the fourth terminal is dormant or non-active in a case that the predefined behavior is satisfied.

Alternatively, step 401 includes:
determining that the third terminal is wake-up or active in a case that the predefined behavior is satisfied;
   and/or,
indicating that the fourth terminal is wake-up or active in a case that the predefined behavior is satisfied.

For example, in a case that a predefined rule defines that dormancy or inactivation is determined by default for not sending the power saving information, the power saving information does not need to be sent. In another example, in a case that a predefined rule defines that a DRX configuration is valid or is used by default for not sending the power saving information, the power saving information does not need to be sent.

For example, in a case that a predefined rule defines that wake-up or activation is determined by default for not sending the power saving information, the power saving information does not need to be sent. In another example, in a case that a predefined rule defines that there is no DRX configuration, a DRX configuration is invalid, or a DRX configuration is not used by default for not sending the power saving information, the power saving information does not need to be sent.

To sum up, in the embodiments of this application, through the setting of the predefined rule, activation or inactivation, or dormancy or wake-up of the SL terminal may also be implemented in a case that power saving information does not need to be transmitted, so as to implement power saving of the terminal.

It should be noted that, in the power saving processing method provided in the embodiments of this application, the execution body may be a power saving processing apparatus, or a control module in the power saving processing apparatus for executing or loading the power saving processing method. In an embodiment of this application, for example, the power saving processing apparatus that performs the power saving processing method is used, to describe the power saving processing apparatus provided in this embodiment of this application.

As shown in FIG. 5, an embodiment of this application provides a power saving processing apparatus 500, including at least one of the following:
a first determining module 501, configured to determine, based on a target condition or first information, transmission of power saving information, and/or determine, based on the target condition or the first information, that a target terminal is dormant or wake-up, or non-active or active, where
the power saving information indicates whether the target terminal is dormant or wake-up, or non-active or active; and the target terminal includes: a first terminal, and/or, a second terminal for performing sidelink communication with the first terminal.

In an optional embodiment, in a case that the target condition includes a first condition, the first determining module includes:
a first transmission sub-module, configured to transmit the power saving information in a case that the first condition is satisfied, where the power saving information indicates that the target terminal is dormant or non-active;
or a first determining sub-module, configured to determine non-transmission of the power saving information in the case that the first condition is satisfied, where the non-transmission of the power saving information indirectly indicates that the target terminal is dormant or non-active.

In an optional embodiment, in a case that the target condition includes a first condition, the first determining module includes:
a second determining sub-module, configured to determine that the target terminal is dormant or non-active in a case that the first condition is satisfied.

In an optional embodiment, the first condition includes at least one of the following that:
no resource is available for SL transmission within a first preset time;
no resource that satisfies a first preset requirement is available for SL transmission within a second preset time;
a timer or a monitoring window for monitoring SL downlink control information DCI expires or is invalid;
no timer or monitoring window for monitoring SL DCI is obtained;
a Uu interface of the first terminal is in a non-active time corresponding to a Uu power saving mechanism;
a time interval between a current moment of the first terminal and a non-active time corresponding to the Uu power saving mechanism is less than a first threshold;
a Uu interface of the first terminal is dormant or is indicated as dormant;
a Uu interface of the first terminal becomes dormant after a third preset time or is indicated as becoming dormant after a third preset time;
a cell, a carrier, or a bandwidth part BWP where SL DCI is located is in a dormant state or is indicated as in a dormant state;
a cell group to which a cell, a carrier, or a BWP where SL DCI is located pertains is in a dormant state or is indicated as in a dormant state;
a cell, a carrier, or a BWP where SL DCI is located is deactivated;
a cell, a carrier, or a BWP where SL DCI is located is deactivated after a fourth preset time or is indicated as deactivated after a fourth preset time;
the target terminal switches to a first target control resource;
the target terminal switches to a first target control resource after a fifth preset time;
the target terminal switches to a first target BWP, a first target cell, or a first target carrier;
the target terminal switches to a first target BWP, a first target cell, or a first target carrier after a sixth preset time;
the first terminal fails in detecting a paging wake up signal on a candidate resource for a paging wake up signal;
a cell, a carrier, or a BWP where an SL resource is located is deactivated;
a cell, a carrier, or a BWP where an SL resource is located is deactivated after a seventh preset time;
a quantity of target SL resources within an eighth preset time is less than a second threshold;
a first preset communication condition is satisfied;
a resource selection mechanism of the target terminal is full sensing;
an SL power saving mechanism of the target terminal is dormant or disabled;
an SL power saving mechanism configuration of the target terminal is valid or is used; or
the target terminal deactivates power saving sensing or resource random selection, where
the first target control resource is not used for transmitting SL DCI, is not used for monitoring SL DCI, does not support SL DCI, or does not include SL DCI, where the target terminal is at least one of the first terminal and the second terminal, where
the first target BWP, the first target cell, or the first target carrier cannot be used for SL transmission, cannot be re-used for SL transmission, does not include an SL resource, does not support an SL, or does not have an association with a second target BWP, a second target cell, or a second target carrier, where the second target BWP, the second target cell, or the second target carrier can be used for SL transmission, can be re-used for SL transmission, includes an SL resource, or supports an SL.

In an optional embodiment, in a case that the target condition includes a second condition, the first determining module includes:
a second transmission sub-module, configured to transmit the power saving information in a case that the second condition is satisfied, where the power saving information indicates that the target terminal is wake-up or active;
or, a second determining sub-module, configured to determine non-transmission of the power saving information in the case that second condition is satisfied, where the non-transmission of the power saving information indirectly indicates that the target terminal is wake-up or active.

In an optional embodiment, in a case that the target condition includes a second condition, the first determining module includes:
a fourth determining sub-module, configured to determine that the target terminal is wake-up or active in a case that the second condition is satisfied.

In an optional embodiment, the second condition includes at least one of the following that:
a resource is available for SL transmission within a tenth preset time;
a resource that satisfies a second preset requirement is available for SL transmission within an eleventh preset time;
a timer or a monitoring window for monitoring SL DCI is started, restarted, or running;
a timer or a monitoring window for monitoring SL DCI is obtained;
a Uu interface of the first terminal is at a wake-up time or an active time corresponding to a Uu power saving mechanism;
a time interval between a current moment of the first terminal and a wake-up time corresponding to a Uu power saving mechanism is less than a third threshold;
a time interval between a current moment of the first terminal and an active time corresponding to a Uu power saving mechanism is less than a fourth threshold;
a Uu interface of the first terminal is wake-up or is indicated as wake-up;
a Uu interface of the first terminal is active or is indicated as activated;
a Uu interface of the first terminal is wake-up after a twelfth preset time or is indicated as wake-up after a twelfth preset time;
a Uu interface of the first terminal is activated after a thirteenth preset time or is indicated as activated after a thirteenth preset time;
a cell, a carrier, or a bandwidth part BWP where SL DCI is located is in a non-dormant state;
a cell, a carrier, or a bandwidth part BWP where SL DCI is located is not indicated as in a dormant state;
a cell group to which a cell, a carrier, or a BWP where SL DCI is located pertains is in a non-dormant state;
a cell group to which a cell, a carrier, or a BWP where SL DCI is located pertains is not indicated as in as a dormant state;
a cell, a carrier, or a BWP where SL DCI is located is wake-up;
a cell, a carrier, or a BWP where SL DCI is located is activated;
a cell, a carrier, or a BWP where SL DCI is located is wake-up after a fourteenth preset time or is indicated as wake-up after a fourteenth preset time;
a cell, a carrier, or a BWP where SL DCI is located is activated after a fifteenth preset time or is indicated as activated after a fifteenth preset time;
the target terminal switches to a second target control resource;
the target terminal switches to a second target control resource after a sixteenth preset time;
the target terminal switches to a third target BWP, a third target cell, or a third target carrier;
the target terminal switches to a third target BWP, a third target cell, or a third target carrier after a seventeenth preset time;
the first terminal exits a power saving mode;
the first terminal exits a power saving mode after an eighteenth preset time;
the first terminal needs to send target uplink data;
the first terminal needs to perform periodic location updating;
the first terminal does not obtain a paging wake up signal configuration;
the first terminal detects at least one paging wake up signal on a candidate resource for a paging wake up signal;
a cell, a carrier, or a BWP where an SL resource is located is activated;
a cell, a carrier, or a BWP where an SL resource is located is activated after a nineteenth preset time;
a quantity of target SL resources within a twentieth preset time is greater than or equal to a fifth threshold;
a second preset communication condition is satisfied;
a resource selection mechanism of the target terminal is power saving sensing or resource random selection;
an SL power saving mechanism of the target terminal is wake-up or activated;
the target terminal does not obtain an SL power saving mechanism configuration;
an SL power saving mechanism configuration of the target terminal is invalid or is not used; or
a resource selection mechanism of the target terminal is a full sensing resource selection mechanism, where
the second target control resource can be used for transmitting SL DCI, can be used for monitoring SL DCI, is capable of supporting SL DCI, or includes SL DCI; where the target terminal is at least one of the first terminal and the second terminal.

The third target BWP, the third target cell, or the third target carrier can be used for SL transmission, can be re-used for SL transmission, includes an SL resource, supports an SL, or has an association with a fourth target BWP, a fourth target cell, or a fourth target carrier; and the fourth target BWP, the fourth target cell, or the fourth target carrier can be used for SL transmission, can be re-used for SL transmission, includes an SL resource, or supports an SL.

In an optional embodiment, the apparatus further includes:
a sending module, configured send, by the first terminal, second information to a control node, where the second information indicates at least one of the following:
indicating that the first terminal satisfies the target condition,
indicating related information of the target condition that the first terminal satisfies;
a transmission resource request for power saving information;
a scheduling request SR; or
a buffer status report BSR.

In an optional embodiment, the first information includes at least one of the following:
first indication information, used for indicating the first terminal to transmit the power saving information, where the power saving information indicates that the target terminal is dormant or non-active;
second indication information, used for indicating the first terminal to transmit the power saving information, where the power saving information indicates that the target terminal is wake-up or active;
third indication information, for indicating a resource for transmitting the power saving information;
fourth indication information, used for indicating that the first terminal does not transmit the power saving information;
fifth indication information, for indicating that the first terminal is wake-up or active; or
sixth indication information, for indicating that the first terminal is dormant or non-active.

In an optional embodiment, the first information is at least one of the following:
SL DCI;
SL configuration grant;
power saving information of a Uu interface,
signaling carrying a dormancy indication;
signaling for activating or deactivating a BWP;
signaling for activating or deactivating a cell;
signaling for activating or deactivating a carrier.

In an optional embodiment, the first determining module and/or the second determining module are further configured to:
determine transmission of the power saving information on a first resource, where the first resource includes at least one of the following:
a resource randomly selected by the first terminal;
a resource obtained by the first terminal through sensing;
a resource recommended or indicated to the first terminal by another terminal;
a resource of the power saving information requested by the first terminal to a control node,
a resource scheduled by the SL DCI obtained by the first terminal;
an SL configuration grant resource obtained by the first terminal,
a resource configured by a control node for the first terminal and for transmitting the power saving information; or
a periodic or semi-static resource of power saving information configured by a control node.

In the embodiments of this application, by controlling transmission of the power saving information by a control node, or by adjusting the transmission of the power saving information based on a predefined target condition, states of the first terminal and/or the second terminal on the sidelink can be adjusted, to avoid unnecessary power consumption of the terminal, thereby achieving the purpose of power saving of the terminal.

It should be noted that, the power saving processing apparatus provided in this embodiment of this application is an apparatus capable of executing the foregoing power saving processing method, and all embodiments of the foregoing power saving processing method are applicable to the apparatus, and can achieve the same or similar beneficial effects.

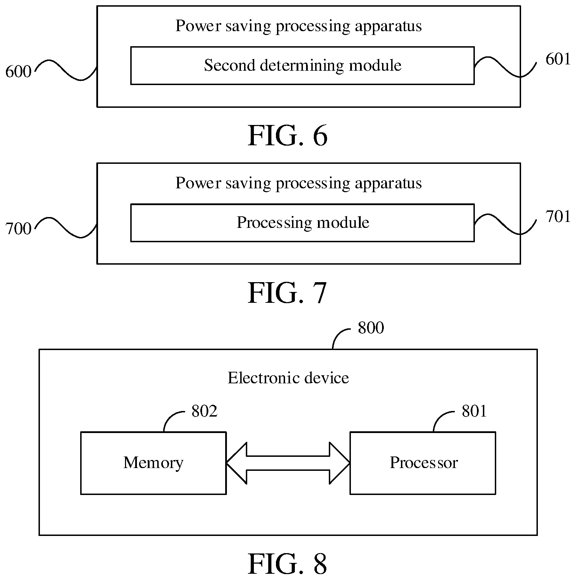

As shown in FIG. 6, an embodiment of this application further provides a power saving processing apparatus 600, including:
a second determining module 601, configured to determine, based on transmission of power saving information of a first terminal, that a target terminal is dormant or wake-up, or non-active or active, where
the target terminal includes: the second terminal, and/or, the first terminal for performing sidelink communication with the second terminal.

In an optional embodiment, the second determining module includes:
a fifth determining sub-module, configured to receive the power saving information transmitted by the first terminal and determine the that the target terminal is dormant or non-active, where
the power saving information indicates that the target terminal is dormant or non-active.

In an optional embodiment, the second determining module includes:
a sixth determining module, configured to, in a case that the second terminal does not receive the power saving information transmitted by the first terminal, determine, based on a predefined rule, that the target terminal is dormant or non-active.

In an optional embodiment, the second determining module includes:
a seventh determining sub-module, configured to receive the power saving information transmitted by the first terminal and determine the that the target terminal is wake-up or active, where
the power saving information indicates that the target terminal is wake-up or active.

In an optional embodiment, the second determining module includes:
an eighth determining module, configured to, in a case that the second terminal does receive the power saving information transmitted by the first terminal, determine, based on a predefined rule, that the target terminal is wake-up or active.

In the embodiments of this application, by indirectly controlling transmission of the power saving information by a control node, or by adjusting the transmission of the power saving information based on a predefined target condition, states of the first terminal and/or the second terminal on the sidelink can be adjusted, to avoid unnecessary power consumption of the terminal, thereby achieving the purpose of power saving of the terminal.

It should be noted that, the power saving processing apparatus provided in this embodiment of this application is an apparatus capable of executing the foregoing power saving processing method, and all embodiments of the foregoing power saving processing method are applicable to the apparatus, and can achieve the same or similar beneficial effects.

As shown in FIG. 7, an embodiment of this application further provides a power saving processing apparatus 700, including:
a processing module 701, configured to perform, based on a predefined behavior, power saving processing on at least one of the third terminal and a fourth terminal.

In an optional embodiment, the predefined behavior includes any one of the following:
a first behavior of not transmitting the power saving information within a first target time;
a second behavior that the power saving information is not received within a second target time;
a third behavior that first information sent by a control node is not received, where the first information indicates that the third terminal is dormant or non-active, or the first information indicates that the third terminal is wake-up or active; or
a fourth behavior that first information sent by a control node is received, where the first information indicates that the third terminal is dormant or non-active, or the first information indicates that the third terminal is wake-up or active.

In an optional embodiment, the processing module includes:
a first processing sub-module, configured to determine that the third terminal is dormant or non-active in a case that the predefined behavior is satisfied;
and/or, configured to indicate dormancy or inactivation of a fourth terminal in the case that the predefined behavior is satisfied.

In an optional embodiment, the processing module includes:
a second processing sub-module, configured to determine that the third terminal is wake-up or active in a case that the predefined behavior is satisfied;
and/or, configured to indicate that the fourth terminal is wake-up or active in a case that the predefined behavior is satisfied.

In the embodiments of this application, through the setting of the predefined rule, activation or inactivation, or dormancy or wake-up of the SL terminal may also be implemented in a case that power saving information does not need to be transmitted, so as to implement power saving of the terminal.

It should be noted that, the power saving processing apparatus provided in this embodiment of this application is an apparatus capable of executing the foregoing power saving processing method, and all embodiments of the foregoing power saving processing method are applicable to the apparatus, and can achieve the same or similar beneficial effects.

The power saving processing apparatus in this embodiment of this application may be an apparatus, or may be a component, an integrated circuit, or a chip in a terminal. The apparatus may be a mobile electronic device or a non-mobile electronic device. Exemplarily, the mobile electronic device may be a mobile phone, a tablet computer, a notebook computer, a palm computer, an in-vehicle electronic device, a wearable device, an ultra-mobile personal computer (Ultra-Mobile Personal Computer, UMPC), a netbook, or a personal digital assistant (Personal Digital Assistant, PDA); and the non-mobile electronic device may be a server, a network attached storage (Network Attached Storage, NAS), a personal computer (Personal Computer, PC), a television (Television, TV), a teller machine, or an automated machine, which are not specifically limited in the embodiments of this application.

The power saving processing apparatus in this embodiment of this application may be an apparatus having an operating system. The operating system may be an Android (Android) operating system, may be an ios operating system, or may be another possible operating system, which is not specifically limited in this embodiment of this application.

The power saving processing apparatus provided in this embodiment of this application may implement various processes implemented by the method embodiments of FIG. 1 to FIG. 4, which are not repeated herein in order to avoid duplication.

Optionally, as shown in FIG. 8, an embodiment of this application further provides a terminal 800, including a processor 801, a memory 802, a program or instructions stored on the memory 802 and capable of being run on the processor 801. The program or the instructions, when executed by the processor 801, implement the processes of the foregoing embodiments of the power saving processing method, and in addition, the same technical effect can be achieved, which are not repeated herein in order to avoid duplication.

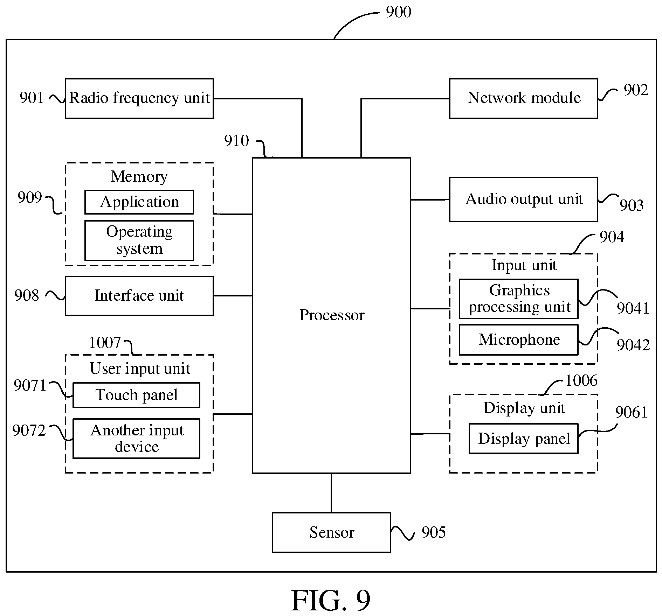

FIG. 9 is a schematic diagram of a hardware structure of a terminal for implementing an embodiment of this application.

The terminal 900 includes, but is not limited to, components such as a radio frequency unit 901, a network module 902, an audio output unit 903, an input unit 904, a sensor 905, a display unit 906, a user input unit 907, an interface unit 908, a memory 909, and a processor 910.

It may be understood by those skilled in the art that the terminal 900 may further include a power supply (for example, a battery) for supplying power to various components, and the power supply may be logically connected to the processor 910 through a power management system, so as to implement functions such as managing charging or discharging, and power consumption management through the power management system. The terminal structure shown in FIG. 9 does not constitute a limitation to the terminal, and the terminal may include more or fewer components than illustrated, or a combination of specific components, or arrangement of different components, which are not described herein again.

It should be understood that, in this embodiment of this application, the input unit 904 may include a graphics processing unit (Graphics a Processing Unit, GPU) 9041 and a microphone 9042. The graphics processing unit 9041 processes image data of a still picture or a video obtained by an image capture apparatus (such as a camera lens) in a video capture mode or an image capture mode. The display unit 906 may include a display panel 9061. The display panel 9061 may be configured in a form of a liquid crystal display, an organic light emitting diode, or the like. The user input unit 907 includes a touch panel 9071 and another input device 9072. The touch panel 9071 is also referred to as a touchscreen. The touch panel 9071 may include a touch detection apparatus and a touch controller. The another input device 9072 may include, but is not limited to, a physical keyboard, a function key (such as a volume control key, a switch key, or the like), a trackball, a mouse, and an operating lever, which is not described in detail herein.

In this embodiment of this application, the radio frequency unit 901 receives downlink data from a network-side device and then sends the information to the processor 910 for processing. In addition, the uplink data is sent to the network side device. Generally, the radio frequency unit 901 includes, but is not limited to, an antenna, at least one amplifier, a transceiver, a coupler, a low noise amplifier, a duplexer, or the like.

The memory 909 may be configured to store a software program or instructions, and various data. The memory 909 may mainly include a storage program or instruction area and a storage data area, where the storage program or instruction area may store an operating system, an application program or instructions required for at least one function (for example, a sound playback function, an image playback function, or the like). In addition, the memory 909 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 910 may include one or more processing units. Optionally, the processor 910 may be integrated with an application processor and a modem processor, where the application processor mainly processes an operating system, a user interface, an application program, or instructions, and the like, and the modem processor mainly processes radio communications, for example, a baseband processor. It may be understood that the foregoing modem processor may also not be integrated into the processor 910.

The processor 910 is configured to determine, based on a target condition or first information, transmission of power saving information, and/or determine, based on the target condition or the first information, that a target terminal is dormant or wake-up, or non-active or active, where
the power saving information indicates whether the target terminal is dormant or wake-up, or non-active or active; and the target terminal includes: a first terminal, and/or, a second terminal for performing sidelink communication with the first terminal.

Alternatively, the processor 910 is configured to determine, based on transmission of power saving information of the first terminal, that a target terminal is dormant or wake-up, or non-active or active, where the target terminal includes: the second terminal, and/or, the first terminal for performing sidelink communication with the second terminal.

Alternatively, the processor 910 is configured to perform, based on a predefined behavior, power saving processing on at least one of the third terminal and a fourth terminal.

In the embodiments of this application, by controlling transmission of the power saving information by a control node, or by adjusting the transmission of the power saving information based on a predefined target condition, states of the first terminal and/or the second terminal on the sidelink can be adjusted, to avoid unnecessary power consumption of the terminal, thereby achieving the purpose of power saving of the terminal.

It should be noted that, the power saving processing apparatus provided in this embodiment of this application is an apparatus capable of executing the foregoing power saving processing method, and all embodiments of the foregoing power saving processing method are applicable to the apparatus, and can achieve the same or similar beneficial effects.

An embodiment of this application further provides a readable storage medium. The readable storage medium stores a program or instructions. The program or instructions, when executed by a processor, cause the processor to perform the processes of the foregoing power saving processing method embodiment, and in addition, the same technical effect can be achieved, which are not repeated herein in order to avoid duplication.

The processor is the processor in electronic device described in the foregoing embodiments. The readable storage medium includes a computer-readable storage medium, such as a computer read-only memory (Read-Only Memory, ROM), a random access memory (Random Access Memory, RAM), a disk, an optical disk, or the like.

An embodiment of this application further provides a chip. The chip includes a processor and a communication interface. The communication interface is coupled to the processor. The processor is configured to run a program or instructions to implement the processes of the foregoing power saving processing method embodiments, and in addition, the same technical effect can be achieved, which are not repeated herein in order to avoid duplication.

An embodiment of this application further provides a computer program product, where the computer program product is stored in a non-transitory readable storage medium, and the computer program product, when executed by at least one processor, implements the processes of the foregoing embodiments of the power saving processing method, and in addition, the same technical effect can be achieved, which are not repeated herein in order to avoid duplication.

It should be understood that the chip mentioned in this embodiment of this application may also be referred to as a system on chip, a system chip, a chip system, or a system-on-a-chip.

It should be noted that, the terms "include", "comprise", or any other variation thereof in this specification is intended to cover a non-exclusive inclusion, so that the stated processes, methods, objects, or apparatuses including a series of elements not only include those elements, but also include other elements not explicitly listed, or further include elements inherent to such the processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the embodiments of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, the features described with reference to some examples can be combined in other examples.

According to the descriptions in the foregoing implementations, a person skilled in the art may clearly learn that the method according to the foregoing embodiments may be implemented by relying on software and a commodity hardware platform or by using hardware, and in most cases the former is the preferred. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the scope of protection of the claims, and such variations shall all fall within the scope of protection of this application.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A power saving processing method, comprising:
determining, by a first terminal and based on a target condition and/or first information, transmission of power saving information, and/or determining, by the first terminal and based on the target condition and/or the first information, that a target terminal is dormant or wake-up, or non-active or active, wherein
the power saving information indicates whether the target terminal is dormant or wake-up, or non-active or active; and the target terminal comprises: the first terminal, and/or, a second terminal for performing sidelink communication with the first terminal.

2. The method according to claim 1, wherein the target condition comprises a first condition, and the determining, by the first terminal and based on the target condition, the transmission of the power saving information comprises:
transmitting, by the first terminal, the power saving information in a case that the first condition is satisfied, wherein the power saving information indicates that the target terminal is dormant or non-active;
or,
determining non-transmission of the power saving information in a case that the first condition is satisfied, wherein the non-transmission of the power saving information indirectly indicates that the target terminal is dormant or non-active.

3. The method according to claim 1, wherein the target condition comprises a first condition, and the determining, by the first terminal and based on the target condition, that the target terminal is dormant or wake-up, or non-active or active comprises:
determining that the target terminal is dormant or non-active in a case that the first condition is satisfied.

4. The method according to claim 2 or 3, wherein the first condition comprises at least one of the following that:
no resource is available for sidelink SL transmission within a first preset time;
no resource that satisfies a first preset requirement is available for SL transmission within a second preset time;
a timer or a monitoring window for monitoring SL downlink control information DCI expires or is invalid;
no timer or monitoring window for monitoring SL DCI is obtained;
a Uu interface of the first terminal is in a non-active time corresponding to a Uu power saving mechanism;
a time interval between a current moment of the first terminal and a non-active time corresponding to the Uu power saving mechanism is less than a first threshold;
a Uu interface of the first terminal is dormant or is indicated as dormant;
a Uu interface of the first terminal becomes dormant after a third preset time or is indicated as becoming dormant after a third preset time;
a cell, a carrier, or a bandwidth part BWP where SL DCI is located is in a dormant state or is indicated as dormant;
a cell group to which a cell, a carrier, or a BWP where SL DCI is located pertains is in a dormant state or is indicated as dormant;
a cell, a carrier, or a BWP where SL DCI is located is deactivated;
a cell, a carrier, or a BWP where SL DCI is located is deactivated after a fourth preset time or is indicated as deactivated after a fourth preset time;
the target terminal switches to a first target control resource;
the target terminal switches to a first target control resource after a fifth preset time;
the target terminal switches to a first target BWP, a first target cell, or a first target carrier;
the target terminal switches to a first target BWP, a first target cell, or a first target carrier after a sixth preset time;
the first terminal does not detect a paging wake up signal on a candidate resource for a paging wake up signal;
a cell, a carrier, or a BWP where an SL resource is located is deactivated;
a cell, a carrier, or a BWP where an SL resource is located is deactivated after a seventh preset time;
a quantity of target SL resources within an eighth preset time is less than a second threshold;
a first preset communication condition is satisfied;
a resource selection mechanism of the target terminal is full sensing;
an SL power saving mechanism of the target terminal is dormant or disabled;
an SL power saving mechanism configuration of the target terminal is valid or is used; or
the target terminal deactivates power saving sensing or resource random selection, wherein
the first target control resource is not used for transmitting SL DCI, is not used for monitoring SL DCI, does not support SL DCI, or does not comprise SL DCI;
the first target BWP, the first target cell, or the first target carrier cannot be used for SL transmission, cannot be re-used for SL transmission, does not comprise an SL resource, does not support SL, or does not have an association with a second target BWP, a second target cell, or a second target carrier, wherein the second target BWP, the second target cell, or the second target carrier can be used for SL transmission, can be re-used for SL transmission, comprises an SL resource, or supports SL.

5. The method according to claim 1, wherein the target condition comprises a second condition, and the determining, by the first terminal and based on the target condition, the transmission of the power saving information comprises:
transmitting, by the first terminal, the power saving information in a case that the second condition is satisfied, wherein the power saving information indicates that the target terminal is wake-up or active;
or,
determining non-transmission of the power saving information in a case that the second condition is satisfied, wherein the non-transmission of the power saving information indirectly indicates that the target terminal is wake-up or active.

6. The method according to claim 1, wherein the target condition comprises a second condition, and the determining, by the first terminal and based on the target condition, that the target terminal is dormant or wake-up, or non-active or active comprises:
determining that the target terminal is wake-up or active in a case that the second condition is satisfied.

7. The method according to claim 5 or 6, wherein the second condition comprises at least one of the following that:
a resource is available for SL transmission within a tenth preset time;
a resource that satisfies a second preset requirement is available for SL transmission within an eleventh preset time;
a timer or a monitoring window for monitoring SL DCI is started, restarted, or running;
a timer or a monitoring window for monitoring SL DCI is obtained;
a Uu interface of the first terminal is at a wake-up time or active time corresponding to a Uu power saving mechanism;
a time interval between a current moment of the first terminal and a wake-up time corresponding to a Uu power saving mechanism is less than a third threshold;
a time interval between a current moment of the first terminal and active time corresponding to a Uu power saving mechanism is less than a fourth threshold;
a Uu interface of the first terminal is wake-up or is indicated as wake-up;
a Uu interface of the first terminal is active or is indicated as activated;
a Uu interface of the first terminal is wake-up after a twelfth preset time or is indicated as wake-up after a twelfth preset time;
a Uu interface of the first terminal is activated after a thirteenth preset time or is indicated as activated after a thirteenth preset time;
a cell, a carrier, or a bandwidth part BWP where SL DCI is located is in a non-dormant state;
a cell, a carrier, or a bandwidth part BWP where SL DCI is located is not indicated as dormant state;
a cell group to which a cell, a carrier, or a BWP where SL DCI is located pertains is in a non-dormant state;
a cell group to which a cell, a carrier, or a BWP where SL DCI is located pertains is not indicated as dormant state;
a cell, a carrier, or a BWP where SL DCI is located is wake-up;
a cell, a carrier, or a BWP where SL DCI is located is activated;
a cell, a carrier, or a BWP where SL DCI is located is wake-up after a fourteenth preset time or is indicated as wake-up after a fourteenth preset time;
a cell, a carrier, or a BWP where SL DCI is located is activated after a fifteenth preset time or is indicated as activated after a fifteenth preset time;
the target terminal switches to a second target control resource;
the target terminal switches to a second target control resource after a sixteenth preset time;
the target terminal switches to a third target BWP, a third target cell, or a third target carrier;
the target terminal switches to a third target BWP, a third target cell, or a third target carrier after a seventeenth preset time;
the first terminal exits a power saving mode;
the first terminal exits a power saving mode after an eighteenth preset time;
the first terminal needs to send target uplink data;
the first terminal needs to update location;
the first terminal does not obtain a paging wake up signal configuration;
the first terminal detects at least one paging wake up signal on a candidate resource for a paging wake up signal;
a cell, a carrier, or a BWP where an SL resource is located is activated;
a cell, a carrier, or a BWP where an SL resource is located is activated after a nineteenth preset time;
a quantity of target SL resources within a twentieth preset time is greater than or equal to a fifth threshold;
a second preset communication condition is satisfied;
a resource selection mechanism of the target terminal is power saving sensing or resource random selection;
an SL power saving mechanism of the target terminal is wake-up or activated;
the target terminal does not obtain an SL power saving mechanism configuration;
an SL power saving mechanism configuration of the target terminal is invalid or is not used; or
a resource selection mechanism of the target terminal is a full sensing resource selection mechanism, wherein
the second target control resource can be used for transmitting SL DCI, can be used for monitoring SL DCI, is capable of supporting SL DCI, or comprises SL DCI; the target terminal is at least one of the first terminal and the second terminal;
the third target BWP, the third target cell, or the third target carrier can be used for SL transmission, can be re-used for SL transmission, comprises an SL resource, supports an SL, or has an association with a fourth target BWP, a fourth target cell, or a fourth target carrier; and the fourth target BWP, the fourth target cell, or the fourth target carrier can be used for SL transmission, can be re-used for SL transmission, comprises an SL resource, or supports an SL.

8. The method according to claim 1, wherein the method further comprises:
sending, by the first terminal, second information to a control node, wherein the second information indicates at least one of the following:
indicating that the first terminal satisfies the target condition;
indicating related information of the target condition that the first terminal satisfies;
a transmission resource request for the power saving information;
a scheduling request SR; or
a buffer status report BSR.

9. The method according to claim 1, wherein the first information comprises at least one of the following:
first indication information, used for indicating the first terminal to transmit the power saving information, wherein the power saving information indicates that the target terminal is dormant or non-active;
second indication information, used for indicating the first terminal to transmit the power saving information, wherein the power saving information indicates that the target terminal is wake-up or active;
third indication information, for indicating a resource for transmitting the power saving information;
fourth indication information, used for indicating that the first terminal does not transmit the power saving information;
fifth indication information, for indicating that the first terminal is wake-up or active; or
sixth indication information, for indicating that the first terminal is dormant or non-active.

10. The method according to claim 1, wherein the first information is at least one of the following:
SL DCI;
SL configuration grant;
power saving information of a Uu interface,
signaling carrying a dormancy indication;
signaling for activating or deactivating a BWP;
signaling for activating or deactivating a cell; or
signaling for activating or deactivating a carrier.

11. The method according to claim 1, wherein the determining transmission of the power saving information comprises:
determining transmission of the power saving information on a first resource, wherein the first resource comprises at least one of the following:
a resource randomly selected by the first terminal;
a resource obtained by the first terminal through sensing;
a resource recommended or indicated to the first terminal by another terminal;
a resource of the power saving information requested by the first terminal to a control node;
a resource scheduled by the SL DCI obtained by the first terminal;
an SL configuration grant resource obtained by the first terminal;
a resource configured by a control node for the first terminal and for transmitting the power saving information; or
a periodic or semi-static resource of power saving information configured by a control node.

12. A power saving processing method, comprising:
determining, by a second terminal and based on transmission of power saving information of a first terminal, that a target terminal is dormant or wake-up, or non-active or active, wherein
the target terminal comprises: the second terminal, and/or, the first terminal for performing sidelink communication with the second terminal.

13. The method according to claim 12, wherein the determining, by the second terminal and based on the transmission of the power saving information of the first terminal, that the target terminal is dormant or wake-up, or non-active or active comprises:
in a case that the second terminal receives the power saving information transmitted by the first terminal, determining that the target terminal is dormant or non-active, wherein
the power saving information indicates that the target terminal is dormant or non-active.

14. The method according to claim 12, wherein the determining, by the second terminal and based on the transmission of the power saving information of the first terminal, that the target terminal is dormant or wake-up, or non-active or active comprises:
in a case that the second terminal does not receive the power saving information transmitted by the first terminal, determining, based on a predefined rule, that the target terminal is dormant or non-active.

15. The method according to claim 12, wherein the determining, by the second terminal and based on the transmission of the power saving information of the first terminal, that the target terminal is dormant or wake-up, or non-active or active comprises:
in a case that the second terminal receives the power saving information transmitted by the first terminal, determining that the target terminal is wake-up or active, wherein
the power saving information indicates that the target terminal is wake-up or active.

16. The method according to claim 12, wherein the determining, by the second terminal and based on the transmission of the power saving information of the first terminal, that the target terminal is dormant or wake-up, or non-active or active comprises:
in a case that the second terminal does not receive the power saving information transmitted by the first terminal, determining, based on a predefined rule, that the target terminal is wake-up or active.

17. A power saving processing method, comprising:
performing, by a third terminal and based on a predefined behavior, power saving processing on at least one of the third terminal and a fourth terminal.

18. The method according to claim 17, wherein the predefined behavior comprises any one of the following:
a first behavior of not transmitting the power saving information within a first target time;
a second behavior that the power saving information is not received within a second target time;
a third behavior that first information sent by a control node is not received, wherein the first information indicates that the third terminal is dormant or non-active, or the first information indicates that the third terminal is wake-up or active; or
a fourth behavior that first information sent by a control node is received, wherein the first information indicates that the third terminal is dormant or non-active, or the first information indicates that the third terminal is wake-up or active.

19. The method according to claim 18, wherein the performing, by the third terminal and based on the predefined behavior, the power saving processing on at least one of the third terminal and the fourth terminal comprises:
determining that the third terminal is dormant or non-active in a case that the predefined behavior is satisfied;
and/or,
indicating that the fourth terminal is dormant or non-active in a case that the predefined behavior is satisfied.

20. The method according to claim 18, wherein the performing the power saving processing on at least one of the third terminal and the fourth terminal comprises:
determining that the third terminal is wake-up or active in a case that the predefined behavior is satisfied;
and/or,
indicating that the fourth terminal is wake-up or active in a case that the predefined behavior is satisfied.

21. A power saving processing apparatus, comprising at least one of the following:
a first determining module, configured to determine, based on a target condition or first information, transmission of power saving information, and/or determine, based on the target condition or the first information, that a target terminal is dormant or wake-up, or non-active or active, wherein
the power saving information indicates whether the target terminal is dormant or wake-up, or non-active or active; and the target terminal comprises: a first terminal, and/or, a second terminal for performing sidelink communication with the first terminal.

22. A power saving processing apparatus, applied to a second terminal, comprising:
a second determining module, configured to determine, based on transmission of power saving information of a first terminal, that a target terminal is dormant or wake-up, or non-active or active, wherein
the target terminal comprises: the second terminal, and/or, the first terminal for performing sidelink communication with the second terminal.

23. A power saving processing apparatus, applied to a third terminal, comprising:
a processing module, configured to perform, based on a predefined behavior, power saving processing on at least one of the third terminal and a fourth terminal.

24. A terminal, comprising a processor, a memory, and a program or instructions stored in the memory and executable on the processor, wherein the program or the instructions, when executed by the processor, implement steps of the power saving processing method according to any one of claims 1 to 11; or the program or the instructions, when executed by the processor, implement steps of the power saving processing method according to any one of claims 12 to 16; or the program or the instructions, when executed by the processor, implement the steps of the power saving processing method according to any one of claims 17 to 20.

25. A readable storage medium, storing a program or instructions, wherein the program or the instructions, when executed by a processor, implement steps of the power saving processing method according to any one of claims 1 to 11; or the program or the instructions, when executed by the processor, implement steps of the power saving processing method according to any one of claims 12 to 16; or the program or the instructions, when executed by the processor, implement steps of the power saving processing method according to any one of claims 17 to 20.

26. A chip, comprising a processor and a communication interface, wherein the communication interface is coupled to the processor, and the processor is configured to run a program or instructions to implement steps of the power saving processing method according to any one of claims 1 to 11, or to implement steps of the power saving processing method according to any one of claims 12 to 16, or to implement steps of the power saving processing method according to any one of claims 17 to 20.

27. A computer program product, wherein the program project is stored in a non-volatile storage medium, and the program product is executed by at least one processor to implement steps of the power saving processing method according to any one of claims 1 to 11, to implement steps of the power saving processing method according to any one of claims 12 to 16, or to implement steps of the power saving processing method according to any one of claims 17 to 20.

28. An electronic device, configured to perform steps of the power saving processing method according to any one of claims 1 to 11, or configured to perform steps of the power saving processing method according to any one of claims 12 to 16, or configured to perform steps of the power saving processing method according to any one of claims 17 to 20.
